# EUROPEAN PATENT SPECIFICATION

(11) **EP 4 081 034 B1**
(45) Date of publication and mention of the grant of the patent: **23.10.2024**
(21) Application number: 21728943.8
(22) Date of filing: 04.06.2021
(51) Int. Cl.: A01N 25/32, A01N 43/16, A01N 37/44, A01N 43/08, A01N 59/16, A01P 15/00, C05G 3/00

(54) **METHOD FOR GROWING PLANTS**
PFLANZENZUCHTVERFAHREN
PROCÉDÉ DE CULTURE DE PLANTES

(30) Priority: 05.06.2020 EP 20178514
(43) Date of publication of application: 02.11.2022
(73) Proprietor: Taminco BV, 9000 Gent (BE)
(72) Inventor: RABASSE, Jean-Michel, 75017 Paris (FR); VERGOTE, Nico, 9772 Kruisem (BE); KYNDT, Tina, 9000 Gent (BE); SINGH, Richard, Raj, 13094 Suva (FJ)
(74) Representative: Gevers Patents
(86) International application number: PCT/EP2021/064975
(87) International publication number: WO 2021/245216

(56) References cited:
- WO-A1-2014/160826
- CN-A- 105 900 982
- US-A1- 2016 227 774
- EMMANUEL KOEN ET AL: "[beta]-Aminobutyric Acid (BABA)-Induced Resistance in Arabidopsis thaliana : Link with Iron Homeostasis", MOLECULAR PLANT-MICROBE INTERACTIONS, vol. 27, no. 11, 1 November 2014 (2014-11-01), US, pages 1226 - 1240, XP055742848, ISSN: 0894-0282, DOI: 10.1094/MPMI-05-14-0142-R
- KOEN EMMANUEL ET AL: "[beta]-Aminobutyric acid (BABA)-induced resistance in Arabidopsis thaliana: link with iron homeostasis. -Supplementary Information", MOLECULAR PLANT-MICROBE INTERACTIONS : MPMI, 8 October 2014 (2014-10-08), pages S1 - S6, XP055834137, Retrieved from the Internet <URL:https://apsjournals.apsnet.org/doi/suppl/10.1094/MPMI-05-14-0142-R>
- HAMDI EL-JENDOUBI ET AL: "The effects of foliar fertilization with iron sulfate in chlorotic leaves are limited to the treated area. A study with peach trees (Prunus persica L. Batsch) grown in the field and sugar beet (Beta vulgaris L.) grown in hydroponics", FRONTIERS IN PLANT SCIENCE, vol. 5, 1 January 2014 (2014-01-01), CH, XP055744226, ISSN: 1664-462X, DOI: 10.3389/fpls.2014.00002
- DALE R WALTERS ET AL: "Possible trade-off associated with the use of a combination of resistance elicitors", PHYSIOLOGICAL AND MOLECULAR PLANT PATHOLOGY, ACADEMIC PRESS LTD, GB, vol. 75, no. 4, 15 February 2011 (2011-02-15), pages 188 - 192, XP028227086, ISSN: 0885-5765, [retrieved on 20110223], DOI: 10.1016/J.PMPP.2011.02.001
- SIDDHARTH TIWARI ET AL: "Induced resistance against the Asian citrus psyllid, Diaphorina citri, by [beta]-aminobutyric acid in citrus", BULLETIN OF ENTOMOLOGICAL RESEARCH, vol. 103, no. 5, 16 April 2013 (2013-04-16), pages 592 - 600, XP055742851, DOI: 10.1017/s0007485313000229
- LI JINYUN ET AL: "Developing Citrus Huanglongbing (HLB) Management Strategies Based on the Severity of Symptoms in HLB-Endemic Citrus-Producing Regions", vol. 109, no. 4, 1 April 2019 (2019-04-01), US, pages 582 - 592, XP055772949, ISSN: 0031-949X, Retrieved from the Internet <URL:https://apsjournals.apsnet.org/doi/pdf/10.1094/PHYTO-08-18-0287-R> DOI: 10.1094/PHYTO-08-18-0287-R
- ÖMÜR BAYSAL ET AL: "Induction of oxidants in tomato leaves treated with DL-[beta]-Amino butyric acid (BABA) and infected with Clavibacter michiganensis ssp. michiganensis", EUROPEAN JOURNAL OF PLANT PATHOLOGY, KLUWER ACADEMIC PUBLISHERS, DO, vol. 112, no. 4, 1 August 2005 (2005-08-01), pages 361 - 369, XP019239307, ISSN: 1573-8469, DOI: 10.1007/S10658-005-6234-1
- BOUBAKRI HATEM ET AL: "Vitamins for enhancing plant resistance", PLANTA, SPRINGER VERLAG, DE, vol. 244, no. 3, 17 June 2016 (2016-06-17), pages 529 - 543, XP036031865, ISSN: 0032-0935, [retrieved on 20160617], DOI: 10.1007/S00425-016-2552-0
- NUDRAT A. AKRAM ET AL: "Ascorbic Acid-A Potential Oxidant Scavenger and Its Role in Plant Development and Abiotic Stress Tolerance", FRONTIERS IN PLANT SCIENCE, vol. 8, 26 April 2017 (2017-04-26), CH, XP055744216, ISSN: 1664-462X, DOI: 10.3389/fpls.2017.00613
- MAR?A L. FALCONE FERREYRA ET AL: "Flavonoids: biosynthesis, biological functions, and biotechnological applications", FRONTIERS IN PLANT SCIENCE, vol. 3, no. 222, 1 January 2012 (2012-01-01), XP055183106, ISSN: 1664-462X, DOI: 10.3389/fpls.2012.00222

## Description

### FIELD OF THE INVENTION

The present invention relates to a method for growing plants, wherein said method comprises supplying plant defence inducers (PDI) in particular for the purpose of protecting plants against pests without negatively affecting their growth and development.

### BACKGROUND OF THE INVENTION

Raising agricultural yields on existing farmlands has become essential for both feeding the continuously growing world population and for protecting natural habitats. In this perspective, controlling crop diseases, pests, and weeds has proven to be an important lever for action. For this purpose, the industry mainly relies on the use of synthetic pesticides as plant protection products (PPP). However, the use of such products is under debate, as their environmental impact is being questioned. Reported adverse effects of conventional pesticides in agriculture impact human and animal health, the environment, beneficial organisms, pollinators, decomposers, and natural enemies. Accordingly, the development of sustainable PPP to manage pests and weeds has become essential.

One promising technology to protect plants against pests and weeds in a sustainable way is the use of plant defence inducers (PDI). Commercial PDI such as acibenzolar are commercially available to growers, while others are actively studied by the research community. These include bet-aminobutyric acid (BABA), jasmonic acid (JA) and salicylic acid (SA). The main drawback hindering the commercial development of these compounds is their negative impact on the growth and development of plants, likely due to the fitness cost incurred by resistance induction. For BABA, this effect was demonstrated by Silué D. and co-workers (Induction of resistance to downy mildew (Peronospora parasitica) in cauliflower by DL-beta-amino-n-butanoic acid (BABA). Plant Pathology (2002), 51, 97 - 102), who reported a 14.7% reduction in growth of cauliflower seedlings treaded with 20 mM BABA, whereas higher concentrations caused even stronger phytotoxic side effects in most seedlings.

Until now, most efforts to cope with these drawbacks and allow safe use of PDI at a commercial scale have focussed on reducing the rates of application of these products, limiting the field uses, combining PDI with conventional pesticides or screening for synergistic effects with safening compounds.

Luna E. et al. (Optimizing chemically induced resistance in tomato against Botrytis cinerea. Plant Disease (2016), 100, 704 - 710) describe the effect of PDI on growth repression on Tomato plants at different rates. The authors describe the use of relatively low concentrations of PDI as means to reduce the negative impact on plant growth. However, root growth repression was observed when treating seedlings with as low as 0.5 mM BABA and 0.25 mM JA.

Koen E. et al. (β-aminobutyric Acid (BABA)-Induced Resistance in Arabidopsis thaliana: Link with Iron Homeostasis. Molecular Plant-Microbe Interactions, vol. 27, No. 11, November 2014, pages 1226-1240) describe how BABA primes plant natural defense reactions. In particular, the authors describe that BABA is able to chelate iron (Fe) in vitro. Furthermore, in vivo, it was shown that it led to a transient Fe deficiency response in *Arabidopsis thaliana* plants, thereby bringing the plant to a defense-ready state.

Controlling damages caused by the phytotoxic side effects of PDI is very complex due to the multiplicity of the causes of damage brought about by the PDI.

In view of the above, there is thus a strong need for methods for growing plants for the purpose of protecting the plants against pests without negatively affecting their growth and development, namely methods for reducing or avoiding the phytotoxic side effects of plant defence inducers.

### SUMMARY OF THE INVENTION

The inventors have now surprisingly found that it is possible to provide an improved method fulfilling the above-mentioned needs.

Thus, there is now provided a method for growing plants, wherein said method comprises at least the steps of
(i) supplying at least one plant defence inducer [inducer (P), herein after] or a salt thereof to at least part of a plant, or a seed, wherein said inducer (P) has phytotoxic side effects and has a general formula (I_{P}): 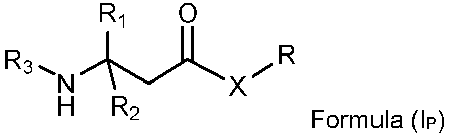 wherein
   - each of X is independently selected from O, S, or NR₄, wherein R₄, equal to or different from each other and at each occurrence, is independently selected from hydrogen, C₁₋₃₆ alkyl, C₂₋₃₆ alkenyl, or OR₅, and wherein each of R₅, equal to or different from each other and at each occurrence, is C₁₋₄ alkyl;
   - each of R is independently selected from hydrogen, C₁₋₃₆ alkyl, or C₂₋₃₆ alkenyl, and wherein said C₁₋₃₆ alkyl, or C₂₋₃₆ alkenyl are optionally substituted with one or more substituents selected from halo, C₁₋₄ alkyl, or CF₃;
   - each of R₁ is C₁₋₆ alkyl;
   - each of R₂ is independently selected from hydrogen, or C₁₋₆ alkyl; and
   - each of R₃ is independently selected from hydrogen, C₁₋₁₀ alkyl, C₂₋₁₀ alkenyl, COR₇, or C(O)OR₇, and wherein each of R₇, equal to or different from each other and at each occurrence, is independently selected from C₁₋₄ alkyl, C₂₋₄ alkenyl, or C₂₋₄ alkynyl, and wherein said C₁₋₄ alkyl, C₂₋₄ alkenyl, or C₂₋₄ alkynyl are optionally substituted with one or more substituents independently selected from halo, or CF₃; and
(ii) reducing or avoiding said phytotoxic side effects by supplying additionally to the at least part of the plant or the seed at least one compound [compound (A), herein after] selected from salts, chelates, oxides or hydroxides of iron(II) or iron(III),
   wherein the compound (A) and the inducer (P) are supplied concomitantly in a liquid form.

### DETAILED DESCRIPTION OF THE INVENTION

Within the context of the present invention, the term "comprising" should not be interpreted as being restricted to the means listed thereafter; it does not exclude other elements or steps. It needs to be interpreted as specifying the presence of the stated features, integers, steps, or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present invention, the only relevant components of the composition are A and B. Accordingly, the terms "comprising" and "including" encompass the more restrictive terms "consisting essentially of" and "consisting of".

As used herein, the terms "optional" or "optionally" means that a subsequently described event or circumstance can or cannot occur, and that the description includes instances where said event or circumstance occurs and instances where it does not.

The inventors have surprisingly found that by additionally supplying a compound [compound (A), herein after], as defined above, to plants to which at least one plant defence inducer of Formula (I_{P}) [inducer (P), herein after] or a salt thereof, as defined above, is also supplied, the phytotoxic side effects of said inducer (P) or salt thereof could be reduced or avoided.

It is understood that, within the context of the method according to the present invention, the inducer (P) is supplied to at least part of a plant or a seed which grows or will be grown. As a general rule, such growth occurs on a substrate, such as soil (for example in a pot, in borders or in the field) or artificial media. The terms "grows", "grown" and "growing" as used herein include all physiological processes leading to an increase in cell size and/or cell number as well as those leading to cellular differentiation.

Within the context of the present invention, the expression "at least one plant defence inducer of Formula (I_{P}) [inducer (P), herein after] or a salt thereof" is intended to denote one or more than one inducer (P). Mixtures of inducers (P) of Formula (I_{P}) can also be used for the purpose of the invention.

In the rest of the text, the expression "at least one inducer (P)" is understood, for the purposes of the present invention, both in the plural and the singular, that is to say the method for growing plants of the present invention may comprise supplying one or more than one inducer (P).

As used herein the term "alkyl", "alkenyl" and "alkynyl" have the broadest meaning generally understood in the art and may include a moiety which is linear or branched, or a combination thereof.

The term "alkyl" - alone or in combination means a straight or branched alkane-derived radical, for example, C_{F-G} alkyl defines a straight or branched alkyl radical having from F to G carbon atoms, e.g. C₁₋₄ alkyl defines a straight or branched alkyl radical having from 1 to 4 carbon atoms such as for example methyl, ethyl, 1-propyl, 2-propyl (isopropyl), 1-butyl, 2-butyl, 2-methyl-2-propyl (tert-butyl), 2-methyl-1-propyl (isobutyl).

The term "alkenyl", alone or in combination, means a straight or branched hydrocarbon containing at least one carbon to carbon double bond, for example C_{H-I} alkenyl defines a straight or branched alkenyl radical having from H to I carbon atoms, e.g. C₂₋₄ alkenyl defines a straight or branched alkenyl radical having from 2 to 4 carbon atoms. Examples of C₂₋₄ alkenyl groups include ethynyl, propenyl, isopropenyl, and butenyl.

The term "alkynyl" alone or in combination means a straight, or branched hydrocarbon containing at least one carbon to carbon triple bond, for example C_{J-K} alkynyl defines a straight or branched alkynyl radical having from J to K carbon atoms, e.g. C₂₋₄ alkynyl defines a straight or branched alkynyl radical having from 2 to 4 carbon atoms. Examples of C₂₋₄ alkynyl groups include ethynyl, propynyl and butynyl.

According to the method of the present invention, the inducer (P) is according to general Formula (I_{P}) 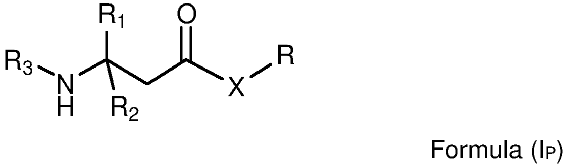 wherein
- each of X is independently selected from O, S, or NR₄, wherein each of R₄, equal to or different from each other and at each occurrence, is independently selected from hydrogen, C₁₋₃₆ alkyl, C₂₋₃₆ alkenyl, or OR₅, and wherein each of R₅, equal to or different from each other and at each occurrence, is C₁₋₄ alkyl;
- each of R is independently selected from hydrogen, C₁₋₃₆ alkyl, or C₂₋₃₆ alkenyl, and wherein said C₁₋₃₆ alkyl, or C₂₋₃₆ alkenyl are optionally substituted with one or more substituents selected from halo, C₁₋₄ alkyl, or CF₃;
- each of R₁ is C₁₋₆ alkyl;
- each of R₂ is independently selected from hydrogen, or C₁₋₆ alkyl; and
- each of R₃ is independently selected from hydrogen, C₁₋₁₀ alkyl, C₂₋₁₀ alkenyl, CORe, or C(O)OR₆, and wherein each of R₆, equal to or different from each other and at each occurrence, is independently selected from C₁₋₄ alkyl, C₂₋₄ alkenyl, or C₂₋₄ alkynyl, and wherein said C₁₋₄ alkyl, C₂₋₄ alkenyl, or C₂₋₄ alkynyl are optionally substituted with one or more substituents independently selected from halo, or CF₃.

In a preferred embodiment of the method according to the present invention, each of X is independently selected from O, or NR₄, wherein each of R₄, equal to or different from each other and at each occurrence, is independently selected from hydrogen, C₁₋₂₄ alkyl, C₂₋₂₄ alkenyl, or OR₅, and wherein each of R₅, equal to or different from each other and at each occurrence, is C₁₋₄ alkyl, or each of X is independently selected from O, or NR₄, wherein each of R₄, equal to or different from each other and at each occurrence, is independently selected from hydrogen, C₁₋₁₂ alkyl, C₂₋₁₂ alkenyl, or OR₅, and wherein each of R₅, equal to or different from each other and at each occurrence, is methyl, or each of X is independently selected from O, or NR₄, wherein each of R₄, equal to or different from each other and at each occurrence, is independently selected from hydrogen, C₁₋₄ alkyl, or C₂₋₄ alkenyl, or each of X is independently selected from O, or NR₄, wherein each of R₄, equal to or different from each other and at each occurrence, is independently selected from hydrogen, methyl, ethyl, propyl, or isopropyl, or R₄ is hydrogen. Desirably, each of X is O.

In a preferred embodiment of the method according to the present invention, each of R is independently selected from hydrogen, C₁₋₂₄ alkyl, or C₂₋₂₄ alkenyl, and wherein said C₁₋₂₄ alkyl, or C₂₋₂₄ alkenyl are optionally substituted with one or more substituents selected from halo, C₁₋₄ alkyl, or CF₃, or each of R is independently selected from hydrogen, C₁₋₁₈ alkyl, or C₂₋₁₈ alkenyl, and wherein said C₁₋₁₈ alkyl, or C₂₋₁₈ alkenyl are optionally substituted with one or more substituents selected from methyl, ethyl, propyl, or isopropyl, or each of R is independently selected from hydrogen, C₁₋₁₂ alkyl, or C₂₋₁₂ alkenyl, and wherein said C₁₋₁₂ alkyl, or C₂₋₁₂ alkenyl are optionally substituted with one or more substituents selected from methyl, or ethyl, or each of R is independently selected from hydrogen, C₁₋₆ alkyl, or C₂₋₆ alkenyl, and wherein said C₁₋₆ alkyl, or C₂₋₆ alkenyl are optionally substituted with one or more substituents selected from methyl, or ethyl, or each of R is independently selected from hydrogen, C₁₋₄ alkyl, or C₂₋₄ alkenyl, or each of R is independently selected from hydrogen, methyl, ethyl, propyl, isopropyl. Desirably, each of R is independently selected from hydrogen, or methyl, more desirably, each of R is hydrogen.

In a preferred embodiment of the method according to the present invention, each of R₁ is C₁₋₅ alkyl, or each of R₁ is independently selected from methyl, ethyl, propyl, isopropyl, butyl, tert-butyl, or isobutyl, or each of R₁ is independently selected from methyl, ethyl, propyl, or isopropyl. Desirably, each of R₁ is independently selected from methyl, or ethyl, more desirably, each of R₁ is methyl.

In a preferred embodiment of the method according to the present invention, each of R₂ is independently selected from hydrogen, or C₁₋₅ alkyl, or each of R₂ is independently selected from hydrogen, methyl, ethyl, propyl, isopropyl, butyl, tert-butyl, or isobutyl, or each of R₂ is independently selected from hydrogen, methyl, or ethyl. Desirably, each of R₂ is independently selected from hydrogen, or methyl, more desirably, each of R₂ is hydrogen.

In a preferred embodiment of the method according to the present invention, each of R₃ is independently selected from hydrogen, C₁₋₈ alkyl, C₂₋₈ alkenyl, CORe, or C(O)OR₆, and wherein each of R₆, equal to or different from each other and at each occurrence, is independently selected from C₁₋₄ alkyl, or C₂₋₄ alkenyl, and wherein said C₁₋₄ alkyl, or C₂₋₄ alkenyl, are optionally substituted with one or more substituents independently selected from halo, or CF₃, or each of R₃ is independently selected from hydrogen, C₁₋₆ alkyl, C₂₋₆ alkenyl, CORe, or C(O)OR₆, and wherein each of R₆, equal to or different from each other and at each occurrence, is independently selected from methyl, ethyl, propyl, isopropyl, butyl, tert-butyl, or isobutyl, or each of R₃ is independently selected from hydrogen, C₁₋₄ alkyl, or COR₆, and wherein each of R₆, equal to or different from each other and at each occurrence, is independently selected from methyl, ethyl, propyl, isopropyl, or each of R₃ is independently selected from hydrogen, methyl, ethyl, propyl, or isopropyl. Desirably, each of R₃ is independently selected from hydrogen, or methyl, more desirably, each of R₃ is hydrogen.

According to a preferred embodiment of the method of the present invention, the at least one inducer (P) is according to general Formula (I_{Pa}) 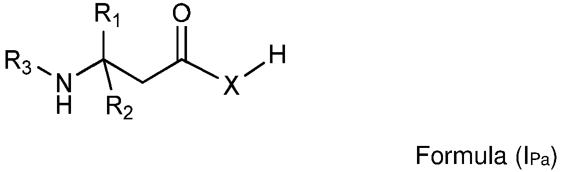 wherein R₁, R₂, R₃ and X have the same meaning as defined above.

According to a preferred embodiment of the present invention, the at least one inducer (P) according to general Formula (I_{P}) is a compound chosen among those of Formula (I_{P1}) [inducer (P₁), herein after], Formula (I_{P2}) [inducer (P₂), herein after], and Formula (I_{P3}) [inducer (P₃), herein after]: 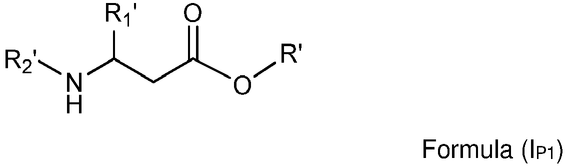 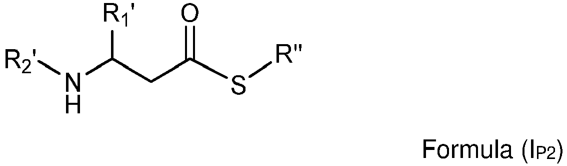 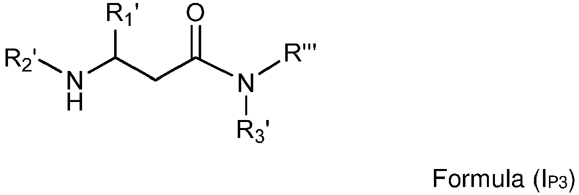 wherein
- each of R' is independently selected from hydrogen, C₁₋₁₂ alkyl, or C₂₋₁₂ alkenyl, and wherein said C₁₋₁₂ alkyl, or C₂₋₁₂ alkenyl are optionally substituted with one or more substituents selected from methyl, or ethyl;
- each of R" is independently selected from hydrogen, C₁₋₁₂ alkyl, or C₂₋₁₂ alkenyl, and wherein said C₁₋₁₂ alkyl, or C₂₋₁₂ alkenyl are optionally substituted with one or more substituents selected from methyl, or ethyl;
- each of R‴ is independently selected from hydrogen, C₁₋₁₂ alkyl, or C₂₋₁₂ alkenyl, and wherein said C₁₋₁₂ alkyl, or C₂₋₁₂ alkenyl are optionally substituted with one or more substituents selected from methyl, or ethyl;
- each of R₃' is independently selected from hydrogen, C₁₋₄ alkyl, C₂₋₄ alkenyl, or OR₄', and wherein each of R₄', equal to or different from each other and at each occurrence, is methyl;
- each of R₁' is independently selected from methyl, ethyl, propyl, isopropyl, butyl, tert-butyl, or isobutyl; and
- each of R₂' is independently selected from hydrogen, C₁₋₄ alkyl, C₂₋₄ alkenyl, COR₅', or C(O)OR₅', and wherein each of R₅', is independently selected from C₁₋₄ alkyl, or C₂₋₄ alkenyl, and wherein said C₁₋₄ alkyl, or C₂₋₄ alkenyl are optionally substituted with one or more substituents independently selected from halo.

In a preferred embodiment of the method according to the present invention, each of R' is independently selected from hydrogen, C₁₋₆ alkyl, or C₂₋₆ alkenyl, and wherein said C₁₋₆ alkyl, or C₂₋₆ alkenyl are optionally substituted with one or more substituents selected from methyl, or ethyl, or each of R' is independently selected from hydrogen, C₁₋₄ alkyl, or C₂₋₄ alkenyl, or each of R' is independently selected from hydrogen, methyl, ethyl, propyl, or isopropyl. Desirably, each of R' is independently selected from hydrogen, or methyl, more desirably, each of R' is hydrogen.

In a preferred embodiment of the method according to the present invention, each of R" is independently selected from hydrogen, C₁₋₆ alkyl, or C₂₋₆ alkenyl, and wherein said C₁₋₆ alkyl, or C₂₋₆ alkenyl are optionally substituted with one or more substituents selected from methyl, or ethyl, or each of R" is independently selected from hydrogen, C₁₋₄ alkyl, or C₂₋₄ alkenyl, or each of R" is independently selected from hydrogen, methyl, ethyl, propyl, or isopropyl. Desirably, each of R" is independently selected from hydrogen, or methyl, more desirably, each of R" is hydrogen.

In a preferred embodiment of the method according to the present invention, each of R‴ is independently selected from hydrogen, C₁₋₆ alkyl, or C₂₋₆ alkenyl, and wherein said C₁₋₆ alkyl, or C₂₋₆ alkenyl are optionally substituted with one or more substituents selected from methyl, or ethyl, or each of R‴ is independently selected from hydrogen, C₁₋₄ alkyl, or C₂₋₄ alkenyl, or each of R‴ is independently selected from hydrogen, methyl, ethyl, propyl, or isopropyl. Desirably, each of R‴ is independently selected from hydrogen, or methyl, more desirably, each of R‴ is hydrogen.

In a preferred embodiment of the method according to the present invention, each of R₃' is independently selected from hydrogen, methyl, ethyl, propyl, or isopropyl, or each of R₃' is independently selected from hydrogen, methyl, or ethyl. Desirably, each of R₃' is independently selected from hydrogen, or methyl, more desirably, each of R₃' is hydrogen.

In a preferred embodiment of the method according to the present invention, each of R₁' is independently selected from methyl, ethyl, propyl, or isopropyl, or each of R₁' is independently selected from methyl, or ethyl. Desirably, each of R₁' is methyl.

In a preferred embodiment of the method according to the present invention, each of R₂' is independently selected from hydrogen, methyl, ethyl, propyl, isopropyl, or COR₅', and wherein each of R₅', is independently selected from hydrogen, methyl, ethyl, propyl, or isopropyl, or each of R₂' is independently selected from hydrogen, methyl, or ethyl, or each of R₂' is independently selected from hydrogen, or methyl. Desirably, each of R₂' is hydrogen.

According to a preferred embodiment of the present invention, the at least one inducer (P) according to general Formula (I_{Pa}) is a compound chosen among those of Formula (I_{P1a}) [inducer (P₁ₐ), herein after], Formula (I_{P2a}) [inducer (P₂ₐ), herein after], and Formula (I_{P3a}) [inducer (P₃ₐ), herein after]: 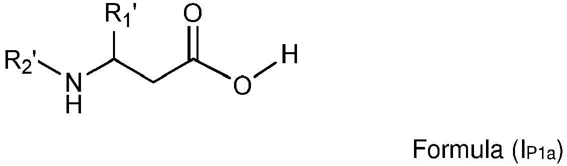 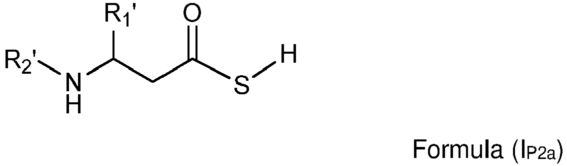 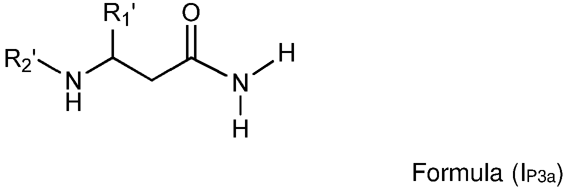 wherein R₁' and R₂' have the same meaning as defined above.

According to a more preferred embodiment of the present invention, the at least one inducer (P) according to general Formula (I_{P}) is the inducer (P₁) according to Formula (I_{P1}) herein below: 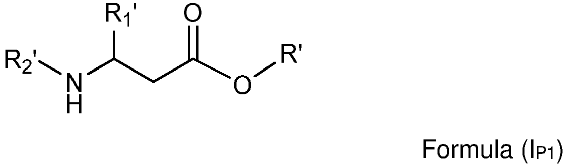 wherein
- each of R' is independently selected from hydrogen, C₁₋₁₂ alkyl, or C₂₋₁₂ alkenyl, and wherein said C₁₋₁₂ alkyl, or C₂₋₁₂ alkenyl are optionally substituted with one or more substituents selected from methyl, or ethyl, or each of R' is independently selected from hydrogen, C₁₋₆ alkyl, or C₂₋₆ alkenyl, and wherein said C₁₋₆ alkyl, or C₂₋₆ alkenyl are optionally substituted with one or more substituents selected from methyl, or ethyl, or each of R' is independently selected from hydrogen, C₁₋₄ alkyl, or C₂₋₄ alkenyl, or each of R' is independently selected from hydrogen, methyl, ethyl, propyl, or isopropyl, or, desirably, each of R' is independently selected from hydrogen, or methyl, or, more desirably, each of R' is hydrogen;
- each of R₁' is independently selected from methyl, or ethyl, or, desirably, each of R₁' is methyl; and
- each of R₂' is independently selected from hydrogen, methyl, or ethyl, or each of R₂' is independently selected from hydrogen, or methyl, or, desirably, each of R₂' is hydrogen.

Preferred inducers (P) according to general Formula (I_{Pa}), for use in the method according to the present invention, is the inducer (P₁ₐ) according to Formula (I_{P1a}) herein below: 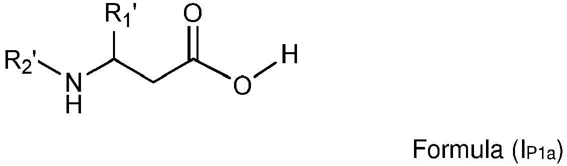 wherein R₁' and R₂' have the same meaning as defined above for Formula (I_{P1}), Formula (I_{P2}), and Formula (I_{P3}), respectively.

A preferred inducer (P) according to Formula (I_{P1a}) is the one according to Formula (I_{P1a}-a1) herein below:

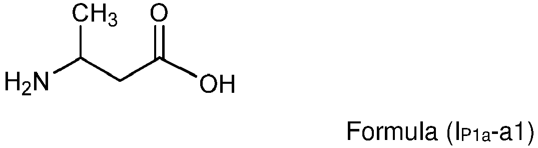

It is further understood that the salt of the inducer (P) according to general Formula (I_{P}), for use in the method according to the present invention, as detailed above, can advantageously be chosen among those salts which are known to those skilled in the art of plant defence inducers. For example and without any limitation, exemplary salts may include alkali metal salts such as sodium or potassium salts, alkaline earth metal salts such as calcium or magnesium salts, hydrohalide salts such as hydrochloride or hydrobromide salts, phosphate salts, sulphate salts, organic salts such as formate or acetate or trifluoroacetate or p-toluenesulphonate or diethylammonium or dicyclohexylammonium salts, and the like.

Preferred salts of the inducer (P) according to general Formula (I_{P}), for use in the method according to the present invention, as detailed above, are phosphate salts.

The inducer (P) of Formula (I_{P}) as specified herein, at least when R₁ and R₂ are different from each other, or a compound of any of the subgroups of inducers of Formula (I_{P1}), Formula (I_{P2}), Formula (I_{P3}), Formula (I_{P1a}), Formula (I_{P2a}), and/or Formula (I_{P3a}) as specified herein, has at least one center of chirality and may exist as stereochemically isomeric forms. The term "stereochemically isomeric forms" as used herein defines all the possible compounds made up of the same atoms bonded by the same sequence of bonds but having different three-dimensional structures. The bond C-R₁ in the inducer (P) of Formula (I_{P}), as detailed above, and the bond C-R₁' in the inducers of Formula (I_{P1}), Formula (I_{P2}), Formula (I_{P3}), Formula (I_{P1a}), Formula (I_{P2a}), and/or Formula (I_{P3a}) may adopt both an (*R*)- and (*S*)-configuration.

Unless otherwise mentioned or indicated, the chemical designation of the inducer (P) of Formula (I_{P}) as specified herein, or a compound of any of the subgroups of inducers of Formula (I_{P1}), Formula (I_{P2}), Formula (I_{P3}), Formula (I_{P1a}), Formula (I_{P2a}), and/or Formula (I_{P3a}) as specified herein, encompasses the mixture of all possible stereochemically isomeric forms, which said compound may possess. Said mixture may contain all diastereomers and/or enantiomers of the basic molecular structure of said compound. All stereochemically isomeric forms of the compounds of the present invention both in pure form or mixed with each other are intended to be embraced within the scope of the present invention.

Pure stereoisomeric forms of the inducer (P) of Formula (I_{P}) as specified herein, or a compound of any of the subgroups of inducers of Formula (I_{P1}), Formula (I_{P2}), Formula (I_{P3}), Formula (I_{P1a}), Formula (I_{P2a}), and/or Formula (I_{P3a}) as specified herein, and intermediates as mentioned herein are defined as isomers substantially free of other enantiomeric or diastereomeric forms of the same basic molecular structure of said compounds or intermediates. In particular, the term "stereoisomerically pure" concerns compounds or intermediates having a stereoisomeric excess of at least 80% (i.e. minimum 90% of one isomer and maximum 10% of the other possible isomers) up to a stereoisomeric excess of 100% (i.e. 100% of one isomer and none of the other), more in particular, compounds or intermediates having a stereoisomeric excess of 90% up to 100%, even more in particular having a stereoisomeric excess of 94% up to 100% and most in particular having a stereoisomeric excess of 97% up to 100%. The terms "enantiomerically pure" and "diastereomerically pure" should be understood in a similar way, but then having regard to the enantiomeric excess, and the diastereomeric excess, respectively, of the mixture in question.

Pure stereoisomeric forms of the compounds and intermediates of this invention may be obtained by the application procedures known in the art. For instance, enantiomers may be separated from each other by the selective crystallization of their diastereomeric salts with optically active acids or bases. Examples thereof are tartaric acid, dibenzoyltartaric acid, ditoluoyltartaric acid and camphorsulfonic acid. Alternatively, enantiomers may be separated by chromatographic techniques using chiral stationary phases. Said pure stereochemically isomeric forms may also be derived from the corresponding pure stereochemically isomeric forms of the appropriate starting materials, provided that the reaction occurs stereospecifically. Desirably, if a specific stereoisomer is desired, said compound will be synthesized by stereospecific methods of preparation. These methods will advantageously employ enantiomerically pure starting materials.

Preferred inducers (P) according to general Formula (I_{P}), for use in the method according to the present invention, are those of Formula (I_{P1-1}) [inducer (P₁₋₁), herein after], Formula (I_{P2-2}) [inducer (P₂₋₂), herein after], or Formula (I_{P3-3}) [inducer (P₃₋₃), herein after]: 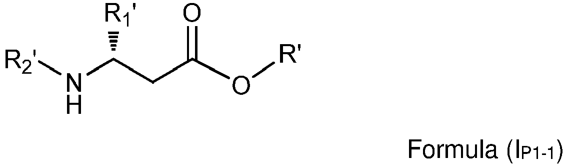 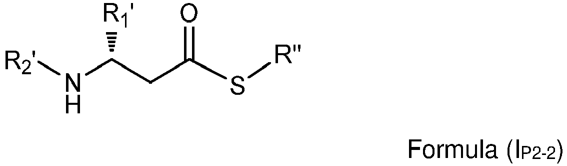 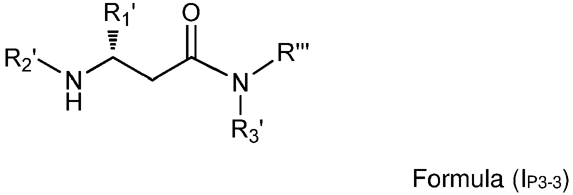 wherein R₁', R₂', Rs', R', R" and R‴ have the same meaning as defined above for Formula (I_{P1}), Formula (I_{P2}), and Formula (I_{P3}), respectively.

Preferred inducers (P) according to general Formula (I_{Pa}), for use in the method according to the present invention, are those of Formula (I_{P1a-1}) [inducer (P₁ₐ₋₁), herein after], Formula (I_{P2a-2}) [inducer (P₂ₐ₋₂), herein after], or Formula (I_{P3a-3}) [inducer (P₃ₐ₋₃), herein after]: 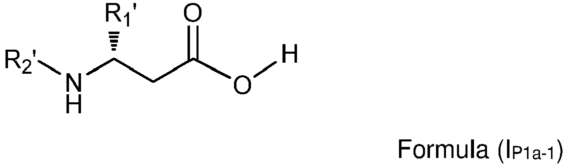 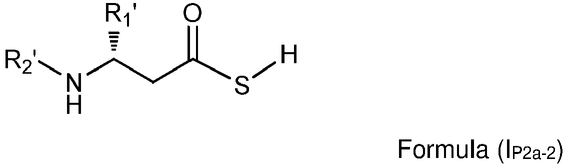 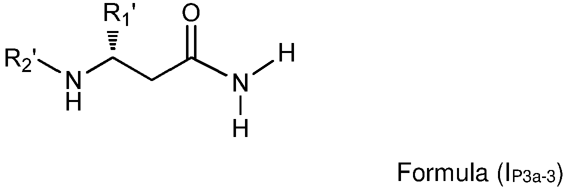 wherein R₁' and R₂' have the same meaning as defined above for Formula (I_{P1}), Formula (I_{P2}), and Formula (I_{P3}), respectively.

A preferred inducer (P) according to Formula (I_{P1a-1}) is the one according to Formula (I_{P1a-1}-a1) herein below:

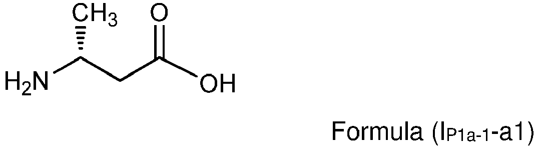

It is further understood that all definitions and preferences as described for the inducer (P) above equally apply for all further embodiments, as described below.

The inducer (P) can be prepared by any method known in the art for the manufacture of beta-amino carbonyl compounds.

In general, the carboxylic acid precursor of the inducer (P) can be esterified by methods known in the art. Non-limiting examples of such methods well-known in the art are Fisher-Speier esterifications, Steglich esterifications, alkylation of carboxylate salts, from alcohols and acid chlorides, from alcohols and acid anhydrides, and for example those notably described in ChemBiochem 2018, 19, 696 - 705 by Van der Poorten et al., Bull. Chem. Soc. Ethiop. 2012, 26, 415 - 420 by Tang et al., Synthetic Commun. 2001, 31, 2169 - 2175 by Rivero et al., Synthetic Commun. 1998, 28, 1963 - 1965 by Anand et al., Molecules 2008, 13, 1111 - 1119 by Li et al.

Non-limitative examples of processes for producing beta-amino carbonyl compounds are taught in Tetrahedron 1995, 51, 12337 - 12350 by Caputo et al., in Org. Synth. 2002, 79, 154 by Linder et al., and in Synth. Comm. 2005, 35, 2789 - 2794 by Koch et al.

As discussed above, it was already described in the prior art that supplying beta-amino carbonyl compounds, such as beta-aminobutyric acid (BABA), in small amounts comprised between 1.0 × 10⁻³ and 100.0 µmole/gram of fresh weight of plant or seed resulted in protection of said plant or seed against pests. However, it was further demonstrated that such compounds also display phytotoxic side effects, despite being supplied in such low amounts.

The inventors have now surprisingly found that said phytotoxic side effects could be avoided or reduced by additionally supplying to said plant or seed, a compound [compound (A), herein after], as described above, as evidenced by the examples below.

Within the context of the present invention, the expression "phytotoxic side effects" broadly refers to any symptom of damage which can be considered as unacceptable to plants, such as but not limited to morphological modifications, reduced quality or yield, chlorosis, necrosis, loss of membrane integrity, oxidative damages, wilting, bleaching, discolorations, reduced growth, inhibition or delay of seed germination, inhibition or delay of flowering, reduced yield, induction of stress-responsive genes and cell death.

It is understood that specific phytotoxic side effects might be more frequently observed for specific plants or seeds. For example, the inducer (P) may cause reduced plant height in tomatoes, cucumbers, strawberries, development of necroses in dicotyledonous crops such as grapevines and lettuces, reduction of fertility of in tomatoes and cucumbers, recoloration of the green leaf tissue such as for example reding.

Within the context of the invention, the term "pest" broadly refers to any harmful organism or disease, such as but not limited to, insects, mites, arachnids, nematodes, molluscs, rodents, bacteria, phytoplasmas, viruses, viroids, molds, fungi, and spores.

As non-limiting examples of plants which can be protected by inducing resistance against pests without negatively affecting their growth and development according to the present invention, mention can be made of cereals (such as durum and other wheat, rye, barley, triticale, oats, rice, or maize (fodder maize and sugar maize/sweet and field corn)), beet (such as sugar beet or fodder beet), fruits (such as pomes, stone fruits or soft fruits, e.g. apples, pears, plums, peaches, nectarines, almonds, cherries, papayas, strawberries, raspberries, blackberries or gooseberries), leguminous plants (such as beans, lentils, peas, alfalfa or soybeans), oil plants (such as rapeseed (oilseed rape), turnip rape, mustard, olives, sunflowers, coconut, cocoa beans, castor oil plants, oil palms, ground nuts or soybeans), cucurbits (such as squashes, pumpkins, cucumber or melons), fiber plants (such as cotton, flax, hemp or jute), citrus fruit (such as oranges, lemons, grapefruits or mandarins), vegetables (such as eggplant, spinach, lettuce, chicory, cabbage, asparagus, cabbages, carrots, onions, garlic, leeks, tomatoes, potatoes, cucurbits or sweet peppers), herbs (such as parsley, mint, basil, sage, rosemary, thyme, rosemary or sage), lauraceous plants (such as avocados, cinnamon or camphor), energy and raw material plants (such as corn, soybean, rapeseed, sugar cane or oil palm; tobacco), nuts (such as walnuts), pistachios, coffee, tea, bananas, vines ( such as table grapes and grape juice grape vines), hop, sweet leaf (also called Stevia), natural rubber plants or ornamental and forestry plants (such as flowers (e.g. carnation, petunias, geranium/pelargoniums, pansies and impatiens), shrubs, broad-leaved trees (such as poplar) or evergreens (such as conifers)), eucalyptus, turf, lawn, grass such as grass for animal feed or ornamental uses.

In a preferred embodiment, plants which can be protected by inducing resistance against pests without negatively affecting their growth and development according to the present invention are selected from potatoes, sugar beets, tobacco, wheat, rye, barley, oats, rice, corn, cotton, soybeans, rapeseed, legumes, sunflowers, coffee or sugar cane, fruits, herbs, vines, ornamentals, or vegetables, such as cucumbers, tomatoes, beans or squashes. Desirably, plants which can be protected by inducing resistance against pests without negatively affecting their growth and development according to the present invention are selected from strawberry, tomato, potato, lettuce, grapes, soybean, and cucurbits.

Within the context of the present invention, the term "plant" is to be understood as including wild type plants and plants which have been modified by either conventional breeding, or mutagenesis or genetic engineering, or by a combination thereof.

In the rest of the text, the terms "plant" and "seed" are understood, for the purposes of the present invention, both in the plural and the singular form.

Within the context of the present invention, the expression "fresh weight of plant or seed" is intended to denote the weight recorded immediately after harvest of said plant or seed.

It is understood that, within the context of the method according to the present invention, the expression "at least one plant part" also includes the whole plant.

It is also understood that, within the context of the present invention, the term "seed" embraces seeds and plant propagules of all kinds. Non-limiting examples include but are not limited to true seeds, seed pieces, suckers, corms, bulbs, fruit, tubers, grains, cuttings and cut shoots.

It is further understood that the at "least part of a plant or a seed" to which the inducer (P) and additionally the compound (A) are supplied refers to at least plant parts or seeds of the plants which are to be protected by inducing resistance against pests without negatively affecting their growth and development according to the present invention.

As to the amount of inducer (P) which is supplied to the at least one plant part or seed, it understood that said amount will be determined according to general practice, in order to obtain the desired effect of inducing plant protection against pests. It is understood that said amount of inducer (P) which is supplied to the at least one plant part or seed will depend on the development stage of the plant or seed to which it is supplied.

As a general rule, the inducer (P), as detailed above, is supplied to a seed in an amount of at least 1.0 × 10⁻³ µmol/ gram, or at least 5.0 × 10⁻³ µmol/ gram or at least 1.0 × 10⁻² µmole/gram, or at least 5.0 × 10⁻² µmole/gram, desirably at least 1.0 × 10⁻¹ µmole/gram of fresh weight of said seed.

It is further understood that the upper limit of the supplied amount of the inducer (P), as detailed above, is not critical. Desirably, the inducer (P) is supplied to the at least one seed in an amount of less than 20 µmole/gram, or less than 10 µmole/gram, or less than 5 µmole/gram, more desirably less than 2 µmole/gram of fresh weight of seed.

In a preferred embodiment of the method of the present invention, the amount of inducer (P) supplied to the at least one seed, relative to the fresh weight of said seed, ranges from 1.0 × 10⁻³ µmol/gram to 20 µmol/gram, or from 5.0 × 10⁻³ µmol/gram to 10 µmol/gram, or from 1.0 × 10⁻² µmol/gram to 5 µmol/gram, or from 1.0 × 10⁻¹ µmol/gram to 2 µmol/gram.

As a general rule, the inducer (P), as detailed above, is supplied to a plant or plant part in an amount of at least 5.0 × 10⁻³ µmol/ gram, or at least 1.0 × 10⁻² µmol/ gram or at least 5.0 × 10⁻² µmole/gram, or at least 1.0 × 10⁻¹ µmole/gram, desirably at least 1.0 µmole/gram of fresh weight of said plant or plant part.

It is further understood that the upper limit of the supplied amount of the inducer (P), as detailed above, is not critical. Desirably, the inducer (P) is supplied to the at least one plant or plant part in an amount of less than 100 µmole/gram, or less than 50 µmole/gram, or less than 20 µmole/gram, more desirably less than 10 µmole/gram of fresh weight of plant or plant part.

In a preferred embodiment of the method of the present invention, the amount of inducer (P) supplied to the at least one plant or plant part, relative to the fresh weight of said seed, ranges from 5.0 × 10⁻³ µmol/gram to 100 µmol/gram, or from 1.0 × 10⁻² µmol/gram to 50 µmol/gram, or from 5.0 × 10⁻² µmol/gram to 20 µmol/gram, or from 1.0 µmol/gram to 10 µmol/gram.

Generally, when an inducer (P), as detailed above, is supplied to at least a plant or a seed in an amount sufficient to obtain the desired effect of inducing plant protection against pests, said inducer (P) will also cause phytotoxic side effects.

The inventors have now surprisingly found that said phytotoxic side effects could be avoided or reduced by additionally supplying to said plant or seed, at least one compound [compound (A), herein after], as described above, as evidenced by the examples below.

Within the context of the present invention, the expression "at least one compound [compound (A), herein after]" is intended to denote one or more than one compound (A). Mixtures of compounds (A) can also be used for the purpose of the invention.

According to the method of the present invention, the compound (A) is selected from salts, chelates, oxides or hydroxides of iron(II) or iron(III).

Non-limiting examples of salts of iron(II) (i.e. ferrous iron) or iron(III) (i.e. ferric iron) notably include acetates, ascorbates, bromides, carbonates, carboxylates, citrates, chlorides, chromates, formates, gluconates, iodides, lactates, nitrates, oxalates, phosphates, salicylates, succinates, malonates, sulphates, sulphides, tartrates and combinations thereof Preferred salts of iron(II) (i.e. ferrous iron) or iron(III) (i.e. ferric iron) may include sulphates, citrates, gluconates and ascorbates.

Non-limiting examples of chelating agents which can be used to obtain iron(II) and iron(III) chelates according to the present invention include ethylenediamine tetraacetic acid (EDTA), diethylenetriamine pentaacetic acid (DTPA), N-(2-hydroxyethyl)ethylenediamine triacetic acid (HEDTA), cyclohexane-1,2-diamine tetraacetic acid (CDTA), ethylenediamine-N,N'-bis(o-hydroxyphenylacetic) acid (EDDHA), ethylenediamine-N-(o-hydroxyphenylacetic)-N'-(p-hydroxyphenylacetic) acid (o,p-EDDHA),ethylenediamine-N,N'-bis(2-hydroxy-4-methylphenylacetic) acid (EDDHMA), ethylenediamine-N,N'-bis(5-carboxy-2-hydroxyphenylacetic) acid (EDDCHA), ethylenediamine-N,N'-bis (2-hydroxy-5-sulfophenylacetic) acid (EDDHSA), N,N'-bis (2-hydroxyphenyl)ethylendiamine-N,N'-diacetic acid (HBED), and ethylenediamine-N,N'-disuccinic acid (EDDS) and combinations thereof.

In one embodiment of the method according to the present invention, the compound (A) is selected from Fe₂SO₄, ferric citrate, ferrous gluconate, and ferrous ascorbate.

It is understood that the amount of compound (A) which is supplied to the at least one plant part or seed additionally to the inducer (P), will depend on the nature of said compound (A).

As a general rule, if the compound (A), is a salt, chelate, oxide or hydroxide of iron(II) or iron(III), it is supplied to a plant or a plant part or a seed in an amount of at least 1.0 × 10⁻⁶ µmol/ gram, or at least 5.0 × 10⁻⁶ µmol/ gram or at least 1.0 × 10⁻⁵ µmole/gram, or at least 5.0 × 10⁻⁵ µmole/gram, desirably at least 1.0 × 10⁻⁴ µmole/gram of fresh weight of said seed.

It is further understood that the upper limit of the supplied amount of the salt, chelate, oxide or hydroxide of iron(II) or iron(III), as detailed above, is not critical. Desirably, the salt, chelate, oxide or hydroxide of iron(II), or a salt, chelate, oxide or hydroxide of iron(III) is supplied to the at least one seed in an amount of less than 5.0 × 10⁻¹ µmole/gram, or less than 1.0 × 10⁻¹ µmole/gram, or less than 5.0 × 10⁻² µmole/gram, more desirably less than 1.0 × 10⁻² µmole/gram of fresh weight of seed.

In a preferred embodiment of the method of the present invention, the amount of salt, chelate, oxide or hydroxide of iron(II) or iron(III) supplied to the at least one seed, relative to the fresh weight of said seed, ranges from 5.0 × 10⁻⁶ µmol/gram to 5.0 × 10⁻¹ µmol/gram, or from 1.0 × 10⁻⁵ µmol/gram to 1.0 × 10⁻¹ µmol/gram, or from 5.0 × 10⁻⁵ µmol/gram to 5.0 × 10⁻² µmol/gram, or from 1.0 × 10⁻⁴ µmol/gram to 1.0 × 10⁻² µmol/gram.

According to the present invention, the inducer (P) and the compound (A) is supplied concomitantly.

According to certain embodiments of the method according to the present invention the inducer (P) and/or the compound (A), as described above, are supplied directly to the at least one plant part or seed, meaning that the inducer (P) and/or the compound (A) is applied directly to a seed, a whole plant or a plant part, typically the foliage, stem or roots.

According to further embodiments of the method according to the present invention, the inducer (P) and/or the compound (A), as described above, is supplied indirectly to the at least one plant part or seed, meaning that the inducer (P) and/or the compound (A) is applied to the locus in which the at least one plant or seed is growing or may grow. Non-limiting examples of such locus include the habitats, soils, areas, materials or environments in which plants or seeds are able to grow.

According to the method according to the present invention, the compound (A) and/or the inducer (P) is supplied concomitantly in a liquid form. Non-limiting examples of suitable liquid forms notably include: solutions, dispersions such as emulsions and suspensions and foams.

Desirably, when the compound (A) and the inducer (P) according to the present invention are supplied concomitantly in a liquid form, both the compound (A) and the inducer (P) are comprised in a concentrated composition [concentrated composition (Cc), herein after].

According to a particular embodiment of the method according to the present invention, the amount of the at least one inducer (P), as detailed above, is equal to or at least 1.0 × 10¹ millimoles per litre of the concentrated composition (Cc) [mM, herein after], or equal to or at least 5.0 × 10¹ mM, or equal to or at least 1.0 × 10² mM, or equal to or at least 5.0 × 10² mM or equal to or at least 1.0 × 10³ mM.

It is further understood that the lower limit of the amount of the at least one inducer (P), as detailed above, is equal to or less than 1.0 × 10⁵ mM, or equal to or less than 5.0 × 10⁴ mM, or equal to or less than 1.0 × 10⁴ mM, or equal to or less than 5.0 × 10³ mM, per litre of the concentrated composition (Cc).

In a preferred embodiment of the method of the present invention, the amount of the at least one compound inducer (P), as detailed above, ranges from 1.0 × 10¹ mM to 1.0 × 10⁵ mM, or from 5.0 × 10¹ mM to 5.0 × 10⁴ mM, or from 1.0 × 10² mM to 1.0 × 10⁴ mM, or from 1.0 × 10³ mM to 5.0 × 10³ mM, per litre of concentrated composition (Cc).

Within the context of the invention, the expression "wherein said at least one inducer (P) is present in an amount equal to at least 1.0 × 10¹ millimoles per litre of the concentrated composition (Cc) [mM, herein after]" refers either to the amount of inducer (P), as detailed above when the concentrated composition (Cc) contains only one inducer (P), or to the sum of the amounts of inducers (P) when the concentrated composition (Cc) contains more than one inducer (P). This implies that when more than one inducer (P) is present, then it is the sum of the amounts of each of said inducer (P) that is present in an amount equal to or at least 1.0 × 10¹ millimoles per litre of concentrated composition (Cc).

According to a further embodiment of the method according to the present invention, the amount of the at least one compound (A) per litre of the concentrated composition (Cc) will depend on the nature of said compound (A).

As a general rule, if the compound (A), is a salt, chelate, oxide or hydroxide of iron(II) or iron(III), as detailed above, the amount of the at least one compound (A) will be equal to or at least 1.0 millimoles per litre of the concentrated composition (Cc) [mM, herein after], or equal to or at least 5.0 mM, or equal to or at least 10.0 mM, or equal to or at least 20.0 mM or equal to or at least 50.0 mM.

It is further understood that the lower limit of the amount of the at least one salt, chelate, oxide or hydroxide of iron(II) or iron(III), as detailed above, is equal to or less than 500.0 mM, or equal to or less than 300.0 mM, or equal to or less than 200.0 mM, or equal to or less than 150.0 mM, per litre of the concentrated composition (Cc).

In a preferred embodiment of the method of the present invention, the amount of the at least one salt, chelate, oxide or hydroxide of iron(II) or iron(III), as detailed above, ranges from 1.0 mM to 500.0 mM, or from 10.0 mM to 300.0 mM, or from 20.0 mM to 200.0 mM, or from 50.0 mM to 150.0 mM, per litre of concentrated composition (Cc).

In general, the concentrated composition (Cc) will be diluted in a solvent, thereby obtaining a diluted composition [diluted composition (C_{D}), herein after]. Desirably, the solvent used for diluting the concentrated composition (Cc) is water.

Either of the concentrated composition (Cc) or the diluted composition (C_{D}) can be supplied to the at least part of a plant or seed according to the present invention.

As to the dilution factor of the concentrated composition (Cc) which is to be applied in order to obtain the diluted composition (C_{D}) according to the method of the present invention, it is understood that the skilled person in the art will practise said dilution in order to comply with the suitable amount of compound (A), which is supplied per gram of fresh weight of plant or seed, as detailed above.

Within the context of the present invention, the dilution factor refers to the ratio of the volume of the initial solution (i.e. the concentrated composition (Cc)) to the volume of the final solution (i.e. the diluted composition (C_{D})).

Generally, the lower limit of the dilution factor of the concentrated composition (Cc) applied in order to obtain the diluted composition (C_{D}) will be determined, amongst others by the phytotoxicity of said composition (Cc) towards the plant or seed to which it is supplied.

The upper limit of the dilution factor of the concentrated composition (Cc) applied in order to obtain the diluted composition (C_{D}) will be adapted to avoid washing out of said composition (Cc) or diluted composition (C_{D}) when it is supplied.

An optimal dilution factor will also have the advantage of allowing efficient application of the composition (i.e. reduced phytotoxicity and complete coverage of the plant, plant part, seed) while at the same time reducing the volumes supplied per area in order to optimise the refilling time of the dispensing device, resulting in more efficient use of equipment, fuel and operator time.

According to some embodiments of the present invention, the dilution factor of the concentrated composition (Cc) applied in order to obtain the diluted composition (C_{D}) will be equal to at least 1 : 20 or equal to or at least 1 : 100, or equal to or at least 1 : 1000, or equal to or at least 1 : 5000.

By means of example, if the concentration of compound (A) is 100 millimoles per litre of concentrated composition (Cc) then in order to supply 1.0 µmol/gram fresh weight plant to a plant having a fresh weight of 10.0 grams, the skilled in the art may supply 100 µL of concentrated composition (Cc) to said plant. However, in order to ease application, the skilled in the art will generally dilute the concentrated composition (Cc) in order to supply the equivalent amount of compound (A) to said plant in a larger volume. For the purpose of achieving a concentration of compound (A) in the diluted composition (C_{D}) of 1 mM, concentrated composition (Cc) will be diluted 100 times, the dilution factor will be 1 : 100, and 10 mL of diluted composition (C_{D}) will be supplied to the plant.

Among the suitable manners for supplying the concentrated composition (C_{C}) or diluted composition (C_{D}), mention can notably be made of spraying (such as aerial spraying or ground spraying, atomizing, vaporizing, drenching, watering, squirting, sprinkling, pouring, fumigating, injecting, painting, seed treating, coating, immersing, soaking and the like by using conventional equipment such as a handpump, a backpack sprayer, a boom sprayer, and the like. Desirably, the concentrated composition (Cc) or diluted composition (C_{D}) are supplied by spraying or by drenching.

According to certain embodiments of the method according to the present invention, either of the concentrated composition (Cc) or the diluted composition (C_{D}), as detailed above, may further comprises at least one surfactant.

Within the contest of the present invention, the expression "at least one surfactant" is intended to denote one or more than one surfactant. Mixtures of surfactants can also be used for the purpose of the invention. In the remainder of the text, the term "surfactant" is understood, for the purposes of the invention both in the plural and the singular form.

When present in the concentrated composition (Cc), the surfactant can desirably be used to stabilize the composition (C) so that the mixture maintains one single liquid phase. Additionally, when present in the diluted composition (C_{D}), the surfactant can improve the penetration of compound (A) in the part of plant or seed to which it is supplied, thereby reducing the onset of action as well as the application rate of compound (A).

Within the context of the present invention, the term "surfactant" is intended to refer to cationic, anionic, amphoteric or non-ionic surfactants.

Non-limiting examples of cationic surfactants include cetrimonium bromide, cetylpyridinium chloride, benzalkonium chloride, benzethonium chloride, dimethyldioctadecylammonium chloride and dioctadecylmethylammonium bromide.

Non-limiting examples of anionic surfactants include ammonium lauryl sulfate, sodium lauryl sulfate, sodium dodecyl sulfate, sodium laureth sulfate, sodium myreth sulfate, dioctyl sodium sulfosuccinate, perfluorooctanesulfonate, perfluorobutanesulfonate, alkyl-aryl ether phosphates and alkyl ether phosphates.

Non-limiting examples of amphoteric surfactants include alkyl betaine, alkyl dimethyl betaine, alkylamido betaine, alkyl amide betaine, alkylamidopropyl betaine, alkyl dimethylammonium betaine, alkyl amidopropyl betaine, alkyl sulfobetaine; alkyl, alkylampho glycinate, alkylamphocarboxy glycinate, alkyl or alkyl substituted imidazoline monocarboxylate, alkyl or alkyl substituted imidazoline dicarboxylate, sodium salts of alkyl monocarboxylates, sodium salts of alkyl monocarboxylates, alkyl beta amino acids, alkyl amidopropyl hydroxysultaine, alkyl ether hydroxysultaine, alkyl amidopropyl dimethyl ammonia acetate, alkyl ampho monoacetate, alkyl ampho diacetate, alkyl dipropionate, alkyl ampho dipropionate, alkyl amino dipropionate, alkyl amphopropionate, alkyl beta amino propionic acid, alkyl dipropionate, alkyl beta iminodipropionate, branched or n-alkyl dimethylamidopropionate, alkyl carboxylated propionate, alkyl imidazoline, methyl alkyl imidazoline, fluorinated alkyl amphoteric mixtures.

Non-limiting examples of non-ionic surfactants notably include polyethoxylated fatty acids; vegetable oils; fatty alcohols; alcohol alkoxylates; alkoxylated alkyl alcohols; polyoxyethylene alkyl alcohols; polyol esters of fatty acids; polyoxyethylene esters of fatty acids; fatty acid amides; polyoxyethylene fatty acid amides; polyalkylene oxide block copolymers; ethoxylated alkyl mercaptans and the like.

Preferred non-ionic surfactants may be chosen among octaethylene glycol monododecyl ether, pentaethylene glycol monododecyl ether, nonoxynols, polyoxyethylene octyl phenyl ether, polyethoxylated tallow amine, cocoamide monoethanolamine, cocoamide dietholamine, poloxamers, glycerol monostearate, glycerol monolaurate, sorbitan monolaurate, sorbitan monosetearate, sorbitan tristearate, polyethylene glycol (20) sorbitan monolaurate, (i.e. PEG(20)sorbitan monolaurate or Tween 20), polyethylene glycol (20) sorbitan monostearate, polyoxyethylene (20) sorbitan monooleate, polyoxyethylene (20) sorbitan monopalmitate, decyl glucoside, lauryl glucoside, octyl glucoside, lauryldimethylamine oxide, BrijTM, glycerol, glyceryl polyethylene glycol ricinoleate (PEG); wherein the number of ethylene oxide units varies from 2 to 200, polyglyceryl ester, polyglyceryl monooleate, decaglyceryl monocaprylate, propylene glycol dicaprilate, triglycerol monostearate, ethoxylated castor oil or mixtures thereof.

As to the amount of the surfactant it is understood that the skilled person in the art will practise said surfactant in a suitable amount according to the standard and general practice known by said skilled person in the art.

According to a particular embodiment of the present invention, the amount of the surfactant, as detailed above, relative to the total weight of the concentrated composition (Cc) is generally equal to at least 5.0 × 10⁻³ wt.%, or equal to or at least 1.0 × 10⁻²wt.%, or equal to or at least 5.0 × 10⁻² wt.%, or equal to or at least 1.0 × 10⁻¹ wt.%. It is further understood that, when present, the amount of the surfactant, as detailed above, relative to the total volume of the concentrated composition (Cc) is generally equal to or less than 80.0 wt.%, or equal to or less than 70.0 wt.%, or equal to or less than 60.0 wt.%, or equal to or less than 50.0 wt.%.

In a preferred embodiment of the method of the present invention, the amount of the surfactant, as detailed above, relative to the total volume of concentrated composition (Cc) ranges from 5.0 × 10⁻³ to 80 wt.%, or from 1.0 × 10⁻² wt.% to 70 wt.%, or from 5.0 × 10⁻² to 60 wt.%, or from 1.0 × 10⁻¹ to 50 wt.%.

According to a particular embodiment of the present invention, the amount of the surfactant, as detailed above, relative to the total weight of the diluted composition (C_{D}) is generally equal to at least 5.0 × 10⁻⁵ wt.%, or equal to or at least 1.0 × 10⁻⁴ wt.%, or equal to or at least 5.0 × 10⁻⁴ wt.%, or equal to or at least 1.0 × 10⁻³ wt.%. It is further understood that, when present, the amount of the surfactant, as detailed above, relative to the total volume of the diluted composition (C_{D}) is generally equal to or less than 20.0 wt.%, or equal to or less than 10.0 wt.%, or equal to or less than 5.0 wt.%, or equal to or less than 2.5 wt.%.

In a preferred embodiment of the method of the present invention, the amount of the surfactant, as detailed above, relative to the total volume of diluted composition (C_{D}) ranges from 5.0 × 10⁻⁵ to 20.0 wt.%, or from 1.0 × 10⁻⁴ wt.% to 10.0 wt.%, or from 5.0 × 10⁻⁴ to 5.0 wt.%, or from 1.0 × 10⁻³ to 2.5 wt.%.

According to certain embodiments of the present invention, either of the concentrated composition (Cc) or the diluted composition (C_{D}), as detailed above, further comprises at least one other additional ingredient [ingredient (I_{C}), herein after] to enhance the appearance, storage, transport, handling and/or performance of the composition (C).

Within the context of the present invention, the expression "at least ingredient of other additional ingredients [ingredient (I_{C}), herein after]" is intended to denote one or more than one ingredient (I_{C}). Mixtures of ingredients (I_{C}) can also be used for the purpose of the invention. In the remainder of the text, the expression "ingredient (I_{C}) is understood, for the purposes of the present invention, both in the plural and the singular form.

Said ingredients (I_{C}) are known to those skilled in the art of agricultural and pest control compositions. Non-limiting examples of ingredients (I_{C}) notably include: suspending agents and similar ingredients to enhance the shelf life of the product, colorants, fragrances, solvents, thinning agents and thickening agents, any material that facilitate the application of the composition (C) such as spreading or sticking agents, antifreezes, evaporation inhibitors, anti-caking agents, defoamers and any other materials customarily employed in formulating pest control compositions.

As to the amount of the additional ingredients (I_{C}), it is understood that the skilled person in the art will practise said additional ingredients (I_{C}) in a suitable amount according to standard and general practice known by said skilled person in the art.

According to some embodiments of the present invention, the weight ratio of the at least one compound (A) to the additional ingredient (I_{C}) is equal to at least 1 : 10, preferably equal to at least 1 : 5, more preferably equal to at least 1 : 2.

In a preferred embodiment of the method according to the present invention, either of the concentrated composition (Cc) or the diluted composition (C_{D}), comprises the at least one inducer (P), as detailed above, at least one compound (A), as detailed above, water, optionally at least one surfactant, as detailed above, and optionally at least one additional ingredient (I_{C}).

According to a preferred embodiment of the present invention, the concentrated composition (Cc) comprises water and the at least one inducer (P), as detailed above, the at least one compound (A), as detailed above, the at least one surfactant, as detailed above, and optionally at least one additional ingredient (I_{C}), as detailed above, and comprises:
- 1.0 × 10¹ - 1.0 × 10⁵ mM of at least one inducer (P) of general Formula (I_{P1a-1}-a1), as defined above;
- 1.0 - 700.0 mM of at least one compound (A), as defined above;
- 1.0 × 10⁻¹ - 50.0 wt.% of at least one non-ionic surfactant, as detailed above;
- optionally at least one additional ingredient (I_{C})
wherein the amount of inducer (P) and of compound (A) is relative to the total volume of the concentrated composition (Cc), whereas the amount of surfactant is relative to the total weight of the concentrated composition (Cc).

According to a preferred embodiment of the present invention, the concentrated composition (Cc) comprises water and the at least one inducer (P), as detailed above, the at least one compound (A), as detailed above, the at least one surfactant, as detailed above, and optionally at least one additional ingredient (I_{C}), as detailed above, and comprises:
- 1.0 × 10¹ - 1.0 × 10⁵ mM of at least one inducer (P) of general Formula (I_{P1a-1}-a1), as defined above;
- 1.0 - 500.0 mM of at least one salt, chelate, oxide or hydroxide of iron(II) or iron(III);
- 1.0 × 10⁻¹ - 50.0 wt.% of at least one non-ionic surfactant, as detailed above;
- optionally at least one additional ingredient (I_{A})
wherein the amount of inducer (P) and of compound (A) is relative to the total volume of the concentrated composition (Cc), whereas the amount of surfactant is relative to the total weight of the concentrated composition (Cc).

According to a more preferred embodiment of the present invention, the concentrated composition (Cc) comprises water and the at least one inducer (P), as detailed above, the at least one compound (A), as detailed above, the at least one surfactant, as detailed above, and optionally at least one additional ingredient (I_{C}), as detailed above, and comprises:
- 1.0 × 10³ - 5.0 × 10³ mM of at least one inducer (P) of general Formula (I_{P1a-1}-a1), as defined above;
- 50.0 - 150.0 mM of Fe(SO)₄;
- 1.0 × 10⁻¹ - 50.0 wt.% of at least one non-ionic surfactant, as detailed above;
- optionally at least one additional ingredient (I_{A})
wherein the amount of inducer (P) and of compound (A) is relative to the total volume of the concentrated composition (Cc), whereas the amount of surfactant is relative to the total weight of the concentrated composition (Cc).

The concentrated composition (Cc) can be prepared by a variety of methods known in the art.

The method for manufacturing the concentrated composition (Cc), as detailed above, but not forming part of the invention, comprises intimate admixing of the at least one inducer (P), the at least one compound (A), water, optionally a surfactant, as defined above, and optionally the at least one additional ingredient (I_{C}), as defined above.

It is understood that the skilled person in the art will carry out said intimate admixing according to general practice such as notably using optimal time, speeds, weights, volumes, and batch quantities.

Additional nutrients and/or plant protection products can also be added to either of the concentrated composition (Cc) or the diluted composition (C_{D}), as detailed above, thereby producing a formulation for growing plants [formulation (F), herein after)].

Another aspect of the present invention, is said formulation (F) which is suitable for growing plants, and comprises:
a) either of the concentrated composition (Cc) or the diluted composition (C_{D}), as detailed above,
   and either of or both of
b) one or more plant nutrients in a collective amount of at least 50 dry weight percent (dry wt. %), based on the dry weight of the formulation; and
c) one or more plant protection product comprising other plant defence inducers, herbicides, pesticides, insecticides, miticides, acaricides, nematicides, fungicides, bactericides, rodenticides or growth-regulating agents.

The concentrated composition (Cc) and the diluted composition (C_{D}) in the formulation includes any of the embodiments of the concentrated composition (Cc) and the diluted composition (C_{D}) described above.

The plant nutrients may comprise primary nutrients, secondary nutrients and/or micronutrients. Examples of suitable primary nutrients include sources of potassium, phosphorus, nitrogen. Examples of suitable secondary nutrients include sources of calcium, magnesium, and sulphur. Examples of suitable micronutrients include sources of boron, cobalt, iron, manganese, molybdenum, zinc, chlorine, and copper.

It is a further object to provide the use of at least one compound (A), as defined above, for reducing or avoiding the phytotoxic side effects of at least one inducer (P), as defined above, which is supplied to at least part of a plant or a seed.

### EXAMPLES

The invention will now be described in more details with examples, whose purpose is merely illustrative and not intended to limit the scope of the invention.

### Preparation of the compositions

The characteristics of the water-based compositions of comparative example 1 (CEx 1) and examples 2, 4 and 10 (Ex 2, Ex 4 and Ex 10 ) are shown in Table 1.

**Table 1**

| | **Ingredients (concentration (mM) relative to the total volume of the composition)** | | |
|---|---|---|---|
| | *Inducer (P) of formula (I_{P1a-1}-a1)* | *FeSO₄* | *Ascorbic acid* |
| CEx 1 | 250 | - | - |
| Ex 2 | 2.50 | 0.40 | - |
| Ex 4 | 250 | 0.20 | - |
| Ex 10 | 2.50 | 0.20 | 0.40 |

All ingredients were mixed until a homogenous mixture was obtained. All compositions contained 0.02 wt.% Tween 20 (Corda International PLC) as surfactant.

### Example 1

The water-based compositions of Comparative Example 1, and Example 2, as listed in Table 1 were applied to two-weeks old tomato seedlings of the commercial variety Moneymaker transplanted seven days earlier in pots containing 85 - 90 grams of soil. Each composition was applied by spraying uniformly over each plant resulting in the application of 6.5 mL of each composition per plant. In addition, control plants were sprayed with a composition consisting of water and 0.02 wt.% Tween 20. Each treatment was replicated 5 times.

No difference in shoot height was observed between the different treatments before application of the compositions.

After treatment, the plants were grown in a growth chamber for ten days, after which an assessment of the height of the shoots was carried out.

The results of this assessment are listed in Table 2.

**Table 2**

| **Treatment** | **Average shoot height 10 days after application (cm)** |
|---|---|
| Control | 19.4 |
| CEx 1 | 15.4 |
| Ex 2 | 18.5 |

The water-based composition of Comparative Example 1 resulted in a strong reduction of the shoot height of the tomato seedlings as compared to the control-treated seedlings.

Plants treated with the water-based composition of Examples 2 showed a significant increase in shoot height as compared to those plants treated with the water-based composition of Comparative Example 1.

### Example 2

The water-based compositions of Comparative Example 1, and examples 2 and 4 (Ex 2 and Ex 4) as listed in Table 1 were applied to two-weeks old tomato seedlings of the commercial variety Moneymaker transplanted seven days earlier in pots containing 85 - 90 grams of soil. Each composition was applied by spraying uniformly over each plant resulting in the application of 6.5 mL of each composition per plant. In addition, control plants were sprayed with a composition consisting of water and 0.02 wt.% Tween 20. Each treatment was replicated 5 times.

No difference in root weight was observed between the different treatments before application of the compositions.

After ten days of growth in a growth chamber, an assessment of the root fresh weight of the plants was carried out.

The results of this assessment are listed in Table 3.

**Table 3**

| **Treatment** | **Average root fresh weight 10 days after application (grams)** |
|---|---|
| Control | 0.3796 |
| CEx 1 | 0.1776 |
| Ex 2 | 0.3214 |
| Ex 4 | 0.3396 |

The water-based composition of Comparative Example 1 resulted in a strong reduction of the root fresh weight of the tomato seedlings as compared to the control-treated seedlings.

Plants treated with the water-based compositions of Examples 2 and 4 showed a significant increase in root fresh weight as compared to those plants treated with the water-based composition of Comparative Example 1.

### Example 3

The water-based compositions of Comparative Example 1, and Examples 4 and 10, as listed in Table 1 were applied to two-weeks old tomato seedlings of the commercial variety Moneymaker transplanted seven days earlier in pots containing 85 - 90 grams of soil. Each composition was applied by spraying uniformly over each plant resulting in the application of 6.5 mL of each composition per plant. In addition, control plants were sprayed with a composition consisting of water and 0.02 wt.% Tween 20. Each treatment was replicated 5 times.

Twenty-four hours after the treatments, each tomato seedling was inoculated with 250 J2 larvae of *Meloidogyne javanica.*

Twenty-eight days after inoculation of the larvae, an assessment of the shoot height, root weight, number of galls and egg mass on the rooting system was carried out.

The results of this assessment are listed in Table 4.

**Table 4**

| **Treatment** | **Average shoot height (cm)** | **Average root fresh weight (grams)** | **Mean number of galls/plant** | **Mean number of egg mass/root system** |
|---|---|---|---|---|
| Control | 48.4 | 22.3 | 94.4 | 81.5 |
| CEx 1 | 39.3 | 16.3 | 51.9 | 26.8 |
| Ex 4 | 531 | 21.3 | 61.6 | 40.8 |
| Ex 10 | 50.1 | 27.8 | 33.9 | 12.3 |

Plants treated by spraying with the water-based composition of Comparative Example 1 and Examples 4 and 10 showed a reduction of the number of galls and egg mass on the rooting system as compared to the control plants. However, the water-based composition of Comparative Example 1 resulted in a strong reduction of both the shoot height and the root fresh weight of the tomato seedlings as compared to the control-treated seedlings, which was not observed for the seedlings treated with the water-based composition of Examples 4 and 10.

In addition to the fact that plants treated with the composition of Examples 4 and 10 did not show a reduction in plant growth, the results in Table 4 show that the compositions of Example 4 and 10, as used in the method of the present invention, are still active for inducing plant defense against the nematode M. *javanica* in an manner equivalent to the composition of Comparative Example 1, which is a potent plant defense inducer shown to induce phytotoxicity and reduction of plant growth.

### Example 4

The water-based compositions of Comparative Example 1, and Examples 4 and 10, as listed in Table 1 were applied to two-weeks old tomato seedlings of the commercial variety Moneymaker transplanted seven days earlier in pots containing 85 - 90 grams of soil. Each composition was applied by drenching uniformly over each plant resulting in the application of 6.5 mL of each composition per plant. In addition, control plants were sprayed with a composition consisting of water and 0.02 wt.% Tween 20. Each treatment was replicated 5 times.

Twenty-four hours after the treatments, each tomato seedling was inoculated with 250 J2 larvae of *Meloidogyne javanica.*

Twenty-eight days after inoculation of the larvae, an assessment of the shoot height, root weight, number of galls and egg mass on the rooting system was carried out.

The results of this assessment are listed in Table 5.

**Table 5**

| **Treatment** | **Average shoot height (cm)** | **Average root fresh weight (grams)** | **Mean number of galls/plant** | **Mean number of egg mass/root system** |
|---|---|---|---|---|
| Control | 48.4 | 22.3 | 94.4 | 81.5 |
| CEx 1 | 43.4 | 15.9 | 52.3 | 30.9 |
| Ex 4 | 50.4 | 29.3 | 78.5 | 58.1 |
| Ex 10 | 53.1 | 19.0 | 64.3 | 538 |

Plants treated by drenching with the water-based composition of Comparative Example 1 and Examples 4 and 10 showed a reduction of the number of galls and egg mass on the rooting system as compared to the control plants. However, the water-based composition of Comparative Example 1 resulted in a strong reduction of both the shoot height and the root fresh weight of the tomato seedlings as compared to the control-treated seedlings, which was not observed for the seedlings treated with the water-based composition of Examples 4 and 10.

In addition to the fact that plants treated with the composition of Examples 4 and 10 did not show a reduction in plant growth, the results in Table 4 show that the compositions of Example 4 and 10, as used in the method of the present invention, are still active for inducing plant defense against the nematode M. *javanica* in an manner equivalent to the composition of Comparative Example 1, which is a potent plant defense inducer shown to induce phytotoxicity and reduction of plant growth.

## Claims

1. A method for growing plants, wherein said method comprises at least the steps of
(i) supplying at least one plant defence inducer [inducer (P), herein after] or a salt thereof to at least part of a plant, or a seed, in an amount that is sufficient for inducing plant protection against pests, wherein said inducer P has phytotoxic side effects and has a general formula (I_{P}): 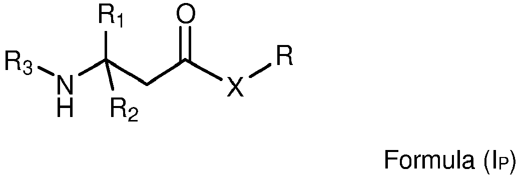 wherein
- each of X is independently selected from O, S, or NR₄, wherein R₄, equal to or different from each other and at each occurrence, is independently selected from hydrogen, C₁₋₃₆ alkyl, C₂₋₃₆ alkenyl, or OR₅, and wherein each of R₅, equal to or different from each other and at each occurrence, is C₁₋₄ alkyl;
- each of R is independently selected from hydrogen, C₁₋₃₆ alkyl, C₂₋₃₆ alkenyl, and wherein said C₁₋₃₆ alkyl, or C₂₋₃₆ alkenyl are optionally substituted with one or more substituents selected from halo, C₁₋₄ alkyl, or CF₃;
- each of R₁ is C₁₋₆ alkyl;
- each of R₂ is independently selected from hydrogen, or C₁₋₆ alkyl; and
- each of R₃ is independently selected from hydrogen, C₁₋₁₀ alkyl, C₂₋₁₀ alkenyl, COR₇, or C(O)OR₇, and wherein each of R₇, equal to or different from each other and at each occurrence, is independently selected from C₁₋₄ alkyl, C₂₋₄ alkenyl, or C₂₋₄ alkynyl, and wherein said C₁₋₄ alkyl, C₂₋₄ alkenyl, or C₂₋₄ alkynyl are optionally substituted with one or more substituents independently selected from halo, or CF₃; and
(ii) reducing or avoiding said phytotoxic side effects by supplying additionally to the at least part of the plant or the seed, at least one compound [compound (A), herein after] selected from salts, chelates, oxides or hydroxides of iron(II) or iron(III),
wherein the compound (A) and the inducer (P) are supplied concomitantly in a liquid form.

2. The method according to claim 1, wherein the at least one inducer (P) or a salt thereof is selected from those of Formulae (I_{P1a}) [inducer (P₁ₐ), herein after], or (I_{P2a}) [inducer (P₂ₐ), herein after], or (I_{P3a}) [inducer (P₃ₐ), herein after] herein below: 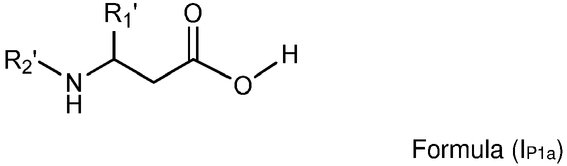 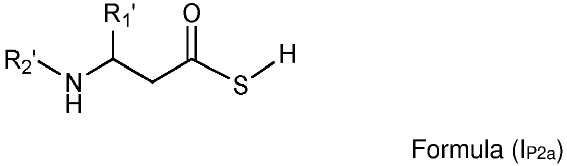 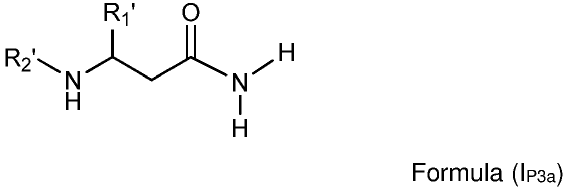 wherein
- each of R₁' is independently selected from methyl, ethyl, propyl, isopropyl, butyl, *tert*-butyl, or isobutyl; and
- each of R₂' is independently selected from hydrogen, C₁₋₄ alkyl, C₂₋₄ alkenyl, COR₅', or C(O)OR₅', and wherein each of R₅', is independently selected from C₁₋₄ alkyl, or C₂₋₄ alkenyl, and wherein said C₁₋₄ alkyl, or C₂₋₄ alkenyl are optionally substituted with one or more substituents independently selected from halo.

3. The method according to claim 1 or claim 2, wherein the at least one inducer (P) or a salt thereof corresponds to the following formula (I_{P1a}-a1):

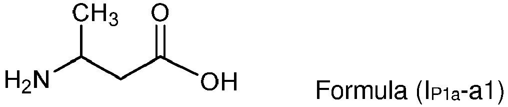

4. The method according to any one of claims 1 to 3, wherein the amount of the at least one inducer (P) supplied to at least part of a plant or a seed is comprised between 1.0 ×10⁻³ and 100 µmol/gram of fresh weight of said at least part of a plant or seed.

5. The method according to any one of claims 1 to 4, wherein the at least one compound (A) is a salt, chelate, oxide or hydroxide of iron(II) or iron(III) selected from Fe₂SO₄, ferric citrate, ferrous gluconate, and ferrous ascorbate.

6. The method according to any one of claims 1 to 5, wherein the at least one compound (A) and the at least one inducer (P) are comprised in in a concentrated composition [concentrated composition (Cc), herein after] and wherein the amount of the at least one inducer (P), per liter of concentrated composition (Cc), ranges from 1.0 × 10¹ mM to 1.0 × 10⁵ mM, or from 5.0 × 10¹ mM to 5.0 × 10⁴ mM, or from 1.0 × 10² mM to 1.0 × 10⁴ mM, or from 1.0 × 10³ mM to 5.0 × 10³ mM and wherein said method further comprises the step of diluting the concentrated composition (Cc) in a solvent, thereby obtaining a diluted composition [diluted composition (C_{D}), herein after], such that the dilution factor of the concentrated composition (Cc) applied in order to obtain the diluted composition (C_{D}) is equal to at least 1 : 20, or equal to at least 1 : 100, or equal to at least 1 : 1000, or equal to at least 1 : 5000.

7. The method according to claim 6, wherein the concentrated composition (Cc) further comprises a surfactant.

8. The method according to claims 6 or 7, wherein the concentrated composition (Cc) further comprises at least one additional ingredient [ingredient (I_{C}), herein below] selected from the group consisting of suspending agents, colorants, fragrances, solvents, thinning agents and thickening agents, spreading or sticking agents; antifreezes, evaporation inhibitors, anti-caking agents and defoamers.

9. The method according to any one of claims 6 to 8, wherein the concentrated composition (Cc) comprises water and comprises:
a. 1.0 × 10¹ - 1.0 × 10⁵ mM of at least one inducer (P) or a salt thereof corresponding to the following formula (I_{P1a}): 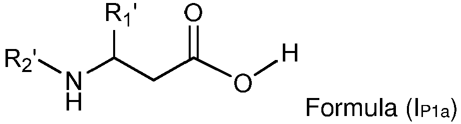 wherein
- each of R₁' is independently selected from methyl, ethyl, propyl, isopropyl, butyl, tert-butyl, or isobutyl; and
- each of R₂' is independently selected from hydrogen, C₁₋₄ alkyl, C₂₋₄ alkenyl, COR₅', or C(O)OR₅', and wherein each of R₅', is independently selected from C₁₋₄ alkyl, or C₂₋₄ alkenyl, and wherein said C₁₋₄ alkyl, or C₂₋₄ alkenyl are optionally substituted with one or more substituents independently selected from halo,
b. 1.0 - 700.0 mM of at least one compound (A), selected from FeSO₄, ferric citrate, ferrous gluconate and ferrous ascorbate,
c. 1.0 × 10⁻¹ - 50.0 wt.% of at least one non-ionic surfactant,
wherein the amount of the at least one inducer (P) and of the at least one compound (A) is relative to the total volume of the concentrated composition (Cc) and the amount of the at least one non-ionic surfactant is relative to the total weight of the concentrated composition (Cc).

10. The method according to any one of claims 6 to 9, wherein the concentrated composition (Cc) comprises water and comprises:
a. 1.0 × 10² - 1.0 × 10⁴ mM of at least one inducer (P) or a salt thereof corresponding to the following formula (I_{P1a}): 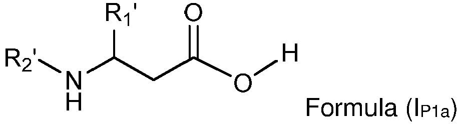 wherein
- each of R₁' is independently selected from methyl, ethyl, propyl, isopropyl, butyl, tert-butyl, or isobutyl; and
- each of R₂' is independently selected from hydrogen, C₁₋₄ alkyl, C₂₋₄ alkenyl, COR₅', or C(O)OR₅', and wherein each of R₅', is independently selected from C₁₋₄ alkyl, or C₂₋₄ alkenyl, and wherein said C₁₋₄ alkyl, or C₂₋₄ alkenyl are optionally substituted with one or more substituents independently selected from halo,
b. 10.0 - 250.0 mM of at least one compound (A), selected from FeSO₄, ferric citrate, ferrous gluconate and ferrous ascorbate,
c. 1.0 × 10⁻³ to 2.5 wt.% of at least one non-ionic surfactant,
wherein the amount of the at least one inducer (P) and of the at least one compound (A) is relative to the total volume of the concentrated composition (Cc) and the amount of the at least one non-ionic surfactant is relative to the total weight of the concentrated composition (Cc).

11. A formulation for growing plants [Formulation (F), herein after] comprising:
a. the concentrated composition (Cc) according to any one of claims 6 to 10,
and either of or both of
b. one or more plant nutrients in a collective amount of at least 50 dry weight percent (dry wt.%), based on the dry weight of the formulation; and
c. one or more plant protection product comprising other plant defence inducers, herbicides, pesticides, insecticides, miticides, acaricides, nematicides, fungicides, bactericides, rodenticides, and growth-regulating agents.

## Patentansprüche

1. Ein Pflanzenzuchtverfahren, wobei das erwähnte Verfahren zumindest die folgenden Schritte umfasst:
a. Zuführen von mindestens einem Induktor der Pflanzenabwehr [nachstehend Induktor (P)] oder eines Salzes davon zu zumindest einem Teil einer Pflanze, oder eines Samens, in einer Menge, die ausreichend ist, um Pflanzenschutz gegen Schädlinge zu induzieren, wobei der erwähnte Induktor P phytotoxische Nebenwirkungen hat und eine allgemein Formel (I_{P}) hat: 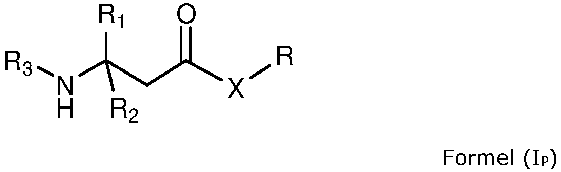 wobei
- jedes X unabhängig ausgewählt ist aus O, S, oder NR₄, wobei R₄, gleich wie oder unterschiedlich voneinander und bei jedem Vorkommen, unabhängig ausgewählt ist aus Wasserstoff, C₁₋₃₆-Alkyl, C₂₋₃₆-Alkenyl, oder OR₅, und wobei jedes R₅, gleich wie oder unterschiedlich voneinander und bei jedem Vorkommen, C₁₋₄-Alkyl ist;
- jedes R unabhängig ausgewählt ist aus Wasserstoff, C₁₋₃₆-Alkyl, C₂₋₃₆-Alkenyl, und wobei das erwähnte C₁₋₃₆-Alkyl, oder C₂₋₃₆-Alkenyl optional mit einem oder mehreren Substituenten ausgewählt aus Halo, C₁₋₄-Alkyl, oder CF₃ substituiert sind;
- jedes R₁ C₁₋₆-Alkyl ist;
- jedes R₂ unabhängig ausgewählt ist aus Wasserstoff, oder C₁₋₆-Alkyl; und
- jedes R₃ unabhängig ausgewählt ist aus Wasserstoff, C₁₋₁₀-Alkyl, C₂₋₁₀-Alkenyl, COR₇, oder C(O)OR₇, und wobei jedes R₇, gleich wie oder unterschiedlich voneinander und bei jedem Vorkommen, unabhängig ausgewählt ist aus C₁₋₄-Alkyl, C₂₋₄-Alkenyl, oder C₂₋₄-Alkynyl, und wobei das erwähnte C₁₋₄-Alkyl, C₂₋₄-Alkenyl, oder C₂₋₄-Alkynyl optional mit einem oder mehreren Substituenten unabhängig ausgewählt aus Halo, oder CF₃ substituiert sind; und
(ii) Beschränken oder Vermeiden der erwähnten phytotoxischen Nebenwirkungen durch zusätzliches Zuführen zum zumindest Teil der Pflanze oder des Samens, von mindestens einer Verbindung [nachstehend Verbindung (A)], ausgewählt aus Salzen, Chelaten, Oxiden oder Hydroxiden von Eisen(II) oder Eisen(III),
wobei die Verbindung (A) und der Induktor (P) gleichzeitig in einer flüssigen Form zugeführt werden.

2. Das Verfahren nach Anspruch 1, wobei der mindestens eine Induktor (P) oder ein Salz davon ausgewählt ist aus jenen der Formeln (I_{P1a}) [nachstehend Induktor (P₁ₐ)], oder (I_{P2a}) [nachstehend Induktor (P₂ₐ)], oder (I_{P3a}) [nachstehend Induktor (P₃ₐ)] hier unten: 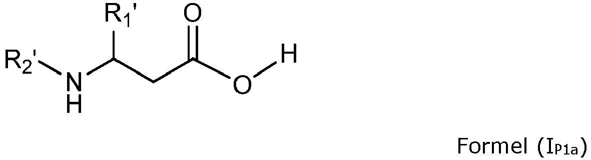 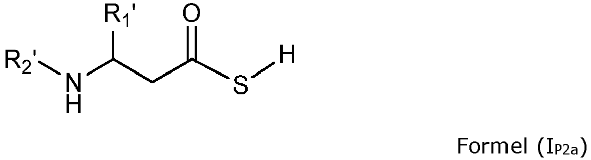 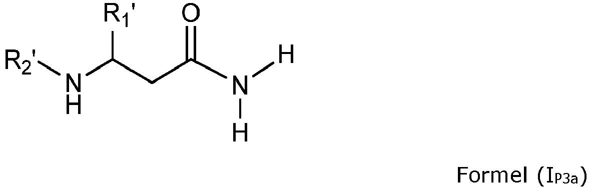 wobei
- jedes R₁' unabhängig ausgewählt ist aus Methyl, Ethyl, Propyl, Isopropyl, Butyl, tert-Butyl, oder Isobutyl; und
- jedes R₂' unabhängig ausgewählt ist aus Wasserstoff, C₁₋₄-Alkyl, C₂₋₄-Alkenyl, COR₅', oder C(O)OR₅', und wobei jedes R₅', unabhängig ausgewählt ist aus C₁₋₄-Alkyl, oder C₂₋₄-Alkenyl, und wobei das erwähnte C₁₋₄-Alkyl, oder C₂₋₄-Alkenyl optional durch einen oder mehrere Substituenten unabhängig ausgewählt aus Halo substituiert sind.

3. Das Verfahren nach Anspruch 1 oder Anspruch 2, wobei der mindestens eine Induktor (P) oder ein Salz davon der folgenden Formel (I_{P1a}-a1) entspricht:

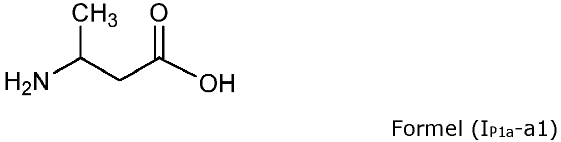

4. Das Verfahren nach irgendeinem der Ansprüche 1 bis 3, wobei die Menge des mindestens einen Induktors (P), der zumindest einem Teil einer Pflanze oder eines Samens zugeführt wird, zwischen 1,0 × 10⁻³ und 100 µmol/Gramm des Frischgewichts des erwähnten zumindest Teils einer Pflanze oder eines Samens beträgt.

5. Das Verfahren nach irgendeinem der Ansprüche 1 bis 4, wobei die mindestens eine Verbindung (A) ein Salz, Chelat, Oxid oder Hydroxid von Eisen(II) oder Eisen(III) ausgewählt aus Fe₂SO₄, Eisencitrat, Eisengluconat, und Eisenascorbat ist.

6. Das Verfahren nach irgendeinem der Ansprüche 1 bis 5, wobei die mindestens eine Verbindung (A) und der mindestens eine Induktor (P) in einer konzentrierten Zusammensetzung [nachstehend konzentrierte Zusammensetzung (Cc)] zusammengefasst sind und wobei die Menge des mindestens einen Induktors (P), pro Liter konzentrierter Zusammensetzung (Cc), von 1,0 × 10¹ mM bis 1,0 × 10⁵ mM, oder von 5,0 × 10¹ mM bis 5,0 × 10⁴ mM, oder von 1,0 × 10² mM bis 1,0 × 10⁴ mM, oder von 1,0 × 10³ mM bis 5,0 × 10³ mM beträgt und wobei das erwähnte Verfahren ferner den Schritt des Verdünnens der konzentrierten Zusammensetzung (Cc) in einem Lösungsmittel umfasst, wodurch eine verdünnte Zusammensetzung [nachstehend verdünnte Zusammensetzung (C_{D})] entsteht, sodass der Verdünnungsfaktor der konzentrierten Zusammensetzung (Cc), der angewendet wird, um die verdünnte Zusammensetzung (C_{D}) zu erreichen, mindestens gleich 1:20, oder mindestens gleich 1:100, oder mindestens gleich 1:1.000, oder mindestens gleich 1:5.000 ist.

7. Das Verfahren nach Anspruch 6, wobei die konzentrierte Zusammensetzung (Cc) ferner eine oberflächenaktive Substanz umfasst.

8. Das Verfahren nach den Ansprüchen 6 oder 7, wobei die konzentrierte Zusammensetzung (Cc) ferner mindestens einen weiteren Bestandteil [nachstehend Bestandteil (Ic)] umfasst, ausgewählt aus der Gruppe bestehend aus Suspendiermitteln, Farbstoffen, Duftstoffen, Lösungsmitteln, Verdünnungsmitteln und Verdickungsmitteln, Netz- oder Haftmitteln, Frostschutzmitteln, Verdampfungsinhibitoren, Trennmitteln und Entschäumungsmitteln.

9. Das Verfahren nach irgendeinem der Ansprüche 6 bis 8, wobei die konzentrierte Zusammensetzung (Cc) Wasser umfasst und Folgendes umfasst:
a. 1,0 × 10¹ - 1,0 × 10⁵ mM von mindestens einem Induktor (P) oder einem Salz davon entsprechend der folgenden Formel (I_{P1a}): 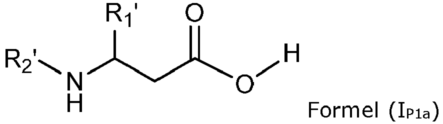 wobei
- jedes R₁' unabhängig ausgewählt ist aus Methyl, Ethyl, Propyl, Isopropyl, Butyl, tert-Butyl, oder Isobutyl; und
- jedes R₂' unabhängig ausgewählt ist aus Wasserstoff, C₁₋₄-Alkyl, C₂₋₄-Alkenyl, COR₅', oder C(O)OR₅', und wobei jedes R₅', unabhängig ausgewählt ist aus C₁₋₄-Alkyl, oder C₂₋₄-Alkenyl, und wobei das erwähnte C₁₋₄-Alkyl, oder C₂₋₄-Alkenyl optional durch einen oder mehrere Substituenten unabhängig ausgewählt aus Halo substituiert sind,
b. 1,0 - 700,0 mM von mindestens einer Verbindung (A), ausgewählt aus FeSO₄, Eisencitrat, Eisengluconat und Eisenascorbat,
c. 1,0 × 10⁻¹ - 50,0 Gew.-% von mindestens einer nicht-ionischen oberflächenaktiven Substanz,
wobei die Menge des mindestens einen Induktors (P) und der mindestens einen Verbindung (A) in Bezug zum Gesamtvolumen der konzentrierten Zusammensetzung (Cc) steht und die Menge der mindestens einen nicht-ionischen oberflächenaktiven Substanz in Bezug zum Gesamtgewicht der konzentrierten Zusammensetzung (Cc) steht.

10. Das Verfahren nach irgendeinem der Ansprüche 6 bis 9, wobei die konzentrierte Zusammensetzung (Cc) Wasser umfasst und Folgendes umfasst:
a. 1,0 × 10² - 1,0 × 10⁴ mM von mindestens einem Induktor (P) oder einem Salz davon entsprechend der folgenden Formel (I_{P1a}): 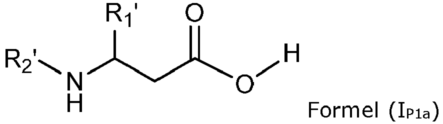 wobei
- jedes R₁' unabhängig ausgewählt ist aus Methyl, Ethyl, Propyl, Isopropyl, Butyl, tert-Butyl, oder Isobutyl; und
- jedes R₂' unabhängig ausgewählt ist aus Wasserstoff, C₁₋₄-Alkyl, C₂₋₄-Alkenyl, COR₅', oder C(O)OR₅', und wobei jedes R₅', unabhängig ausgewählt ist aus C₁₋₄-Alkyl, oder C₂₋₄-Alkenyl, und wobei das erwähnte C₁₋₄-Alkyl, oder C₂₋₄-Alkenyl optional durch einen oder mehrere Substituenten unabhängig ausgewählt aus Halo substituiert sind,
b. 10,0 - 250,0 mM von mindestens einer Verbindung (A), ausgewählt aus FeSO₄, Eisencitrat, Eisengluconat und Eisenascorbat,
c. 1,0 × 10⁻³ - 2,5 Gew.-% von mindestens einer nicht-ionischen oberflächenaktiven Substanz,
wobei die Menge des mindestens einen Induktors (P) und der mindestens einen Verbindung (A) in Bezug zum Gesamtvolumen der konzentrierten Zusammensetzung (Cc) steht und die Menge der mindestens einen nicht-ionischen oberflächenaktiven Substanz in Bezug zum Gesamtgewicht der konzentrierten Zusammensetzung (Cc) steht.

11. Eine Rezeptur zur Pflanzenzucht [nachstehend Rezeptur (F)], welche Folgendes umfasst:
a. die konzentrierte Zusammensetzung (Cc) nach irgendeinem der Ansprüche 6 bis 10,
und eines oder beide der folgenden Elemente:
b. einen oder mehrere Pflanzennährstoffe in einer gemeinsamen Menge von mindestens 50 Trockengewichtsprozent (Trockengew.-%), basierend auf dem Trockengewicht der Rezeptur; und
c. ein oder mehrere Pflanzenschutzprodukte, darunter andere Induktoren der Pflanzenabwehr, Herbizide, Pestizide, Insektizide, Mitizide, Akarizide, Nematizide, Fungizide, Bakterizide, Rodentizide und Wachstumsregulatoren.

## Revendications

1. Procédé de culture de plantes, dans lequel ledit procédé comprend au moins les étapes suivantes
(i) fournir au moins un inducteur de défense de plante [inducteur (P), ci-après] ou un de ses sels à au moins une partie d'une plante ou d'une graine, en quantité suffisante pour induire une protection de plante contre des organismes nuisibles, dans lequel ledit inducteur P a des effets secondaires phytotoxiques et a la formule générale (I_{P}) : 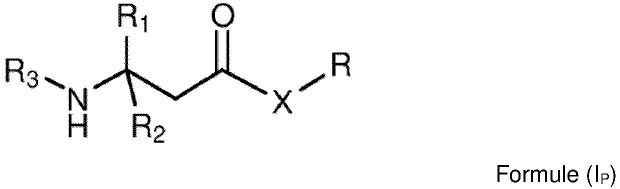 dans lequel
- chacun des X est indépendamment choisi parmi O, S ou NR₄, dans lequel R₄, égal ou différent l'un de l'autre et à chaque occurrence, est indépendamment choisi parmi l'hydrogène, l'alkyle en C₁₋₃₆, l'alcényle en C₂₋₃₆ ou OR₅, et dans lequel chacun des R₅, égal ou différent l'un de l'autre et à chaque occurrence, est un alkyle en C_{1-4;}
- chacun des R est indépendamment choisi parmi l'hydrogène, l'alkyle en C₁₋₃₆, l'alcényle en C₂₋₃₆, et dans lequel l'alkyle en C₁₋₃₆ ou l'alcényle en C₂₋₃₆ est éventuellement substitué par un ou plusieurs substituants choisis parmi le halo, l'alkyle en C₁₋₄ ou le CF₃;
- chacun des R₁ est l'alkyle en C_{1-6;}
- chacun des R₂ est indépendamment choisi parmi l'hydrogène ou l'alkyle en C_{1-6;} et
- chacun des R₃ est indépendamment choisi parmi l'hydrogène, l'alkyle en C₁₋₁₀, l'alcényle en C₂₋₁₀ , COR₇ ou C(O)OR₇, et dans lequel chacun des R₇, égal ou différent l'un de l'autre et à chaque occurrence, est indépendamment choisi parmi l'alkyle en C₁₋₄, l'alcényle en C₂₋₄ ou l'alcynyle en C₂₋₄, et dans lequel ledit alkyle en C₁₋₄, l'alcényle en C₂₋₄ ou l'alcynyle en C₂₋₄ sont éventuellement substitués par un ou plusieurs substituants indépendamment choisis parmi le halo ou le CF₃; et
(ii) réduire ou éviter lesdits effets secondaires phytotoxiques en fournissant en plus à ladite au moins partie de la plante ou de la graine, au moins un composé [composé (A), ci-après] choisi parmi les sels, les chélates, les oxydes ou les hydroxydes de fer(ll) ou de fer(III),
dans lequel le composé (A) et l'inducteur (P) sont fournis simultanément sous forme liquide.

2. Procédé selon la revendication 1, dans lequel ledit au moins un inducteur (P) ou un de ses sels est choisi parmi les formules (I_{P1a}) [inducteur (P₁ₐ), ci-après], ou (I_{P2a}) [inducteur (P₂ₐ), ci-après], ou (I_{P3a}) [inducteur (P₃ₐ), ci-après] ci-dessous : 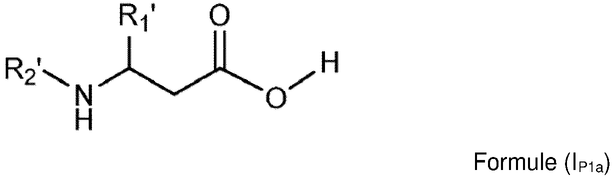 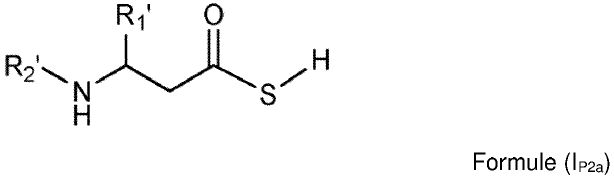 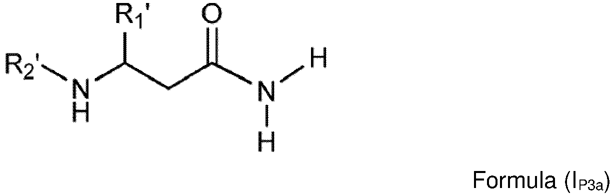 dans lequel
- chacun des R₁' est indépendamment choisi parmi le méthyle, l'éthyle, le propyle, l'isopropyle, le butyle, le tert-butyle ou l'isobutyle ; et
- chacun des R₂' est indépendamment choisi parmi l'hydrogène, l'alkyle en C₁₋₄, l'alcényle en C₂₋₄, COR₅' ou C(O)OR₅', et dans lequel chacun des R₅' est indépendamment choisi parmi l'alkyle en C₁₋₄ ou l'alcényle en C₂₋₄, et dans lequel ledit alkyle en C₁₋₄ ou l'alcényle en C₂₋₄ sont éventuellement substitués par un ou plusieurs substituants indépendamment choisis parmi les halos.

3. Procédé selon la revendication 1 ou la revendication 2, dans lequel ledit au moins un inducteur (P) ou un de ses sels répond à la formule suivante (I_{P1a}-a1) :

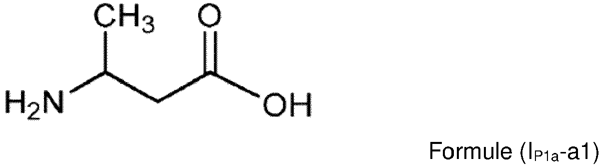

4. Procédé selon l'une quelconque des revendications 1 à 3, dans lequel la quantité dudit au moins un inducteur (P) fournie à au moins une partie d'une plante ou d'une graine est comprise entre 1,0 ×10⁻³ et 100 µmol/gramme de poids à l'état frais de ladite au moins une partie d'une plante ou d'une graine.

5. Procédé selon l'une quelconque des revendications 1 à 4, dans lequel ledit au moins un composé (A) est un sel, un chélate, un oxyde ou un hydroxyde de fer(ll) ou de fer(III) choisi parmi Fe₂SO₄, le citrate ferrique, le gluconate ferreux et l'ascorbate ferreux.

6. Procédé selon l'une quelconque des revendications 1 à 5, dans lequel ledit au moins un composé (A) et ledit au moins un inducteur (P) sont compris dans une composition concentrée [composition concentrée (Cc), ci-après] et dans lequel la quantité dudit au moins un inducteur (P), par litre de composition concentrée (Cc), est comprise entre 1,0 ×10¹ mM et 1,0 ×10⁵ mM, ou entre 5,0 ×10¹ mM et 5,0 ×10⁴ mM, ou entre 1,0 ×10² mM et 1,0 ×10⁴ mM, ou entre 1,0 ×10³ mM et 5,0 ×10³ mM et dans lequel ledit procédé comprend en outre l'étape de dilution de la composition concentrée (Cc) dans un solvant, ce qui permet d'obtenir une composition diluée [composition diluée (C_{D}), ci-après], de telle sorte que le facteur de dilution de la composition concentrée (Cc) appliqué pour obtenir la composition diluée (C_{D}) est égal à au moins 1 : 20, ou égal à au moins 1 : 100, ou égal à au moins 1 : 1000, ou égal à au moins 1 : 5000.

7. Procédé selon la revendication 6, dans lequel la composition concentrée (Cc) comprend en outre un agent tensioactif.

8. Procédé selon les revendications 6 ou 7, dans lequel la composition concentrée (Cc) comprend en outre au moins un ingrédient supplémentaire [ingrédient (I_{C}), ci-après] choisi dans le groupe constitué d'agents de suspension, de colorants, de parfums, de solvants, d'agents de dilution et d'agents épaississant, d'agents d'étalement ou de collage ; d'antigels, d'inhibiteurs d'évaporation, d'agents anti-agglomérants et d'antimousses.

9. Procédé selon l'une quelconque des revendications 6 à 8, dans lequel la composition concentrée (Cc) comprend de l'eau et comprend :
a. 1,0 ×10¹ - 1,0 ×10⁵ mM d'au moins un inducteur (P) ou d'un de ses sels correspondant à la formule suivante (I_{P1a}): 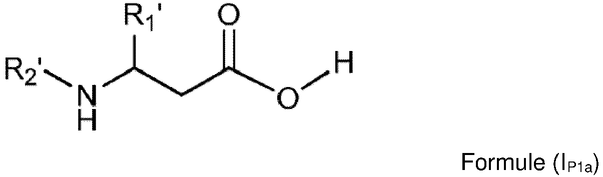 dans lequel
- chacun des R₁' est indépendamment choisi parmi le méthyle, l'éthyle, le propyle, l'isopropyle, le butyle, le tert-butyle ou l'isobutyle ; et
- chacun des R₂' est indépendamment choisi parmi l'hydrogène, l'alkyle en C₁₋₄, l'alcényle en C₂₋₄ , COR₅' ou C(O)OR₅', et dans lequel chacun des R₅' est indépendamment choisi parmi l'alkyle en C₁₋₄ ou l'alcényle en C₂₋₄, et dans lequel ledit alkyle en C₁₋₄ ou l'alcényle en C₂₋₄ sont éventuellement substitués par un ou plusieurs substituants indépendamment choisis parmi les halos,
b. 1,0 - 700,0 mM d'au moins un composé (A), choisi parmi le FeSO₄, le citrate ferrique, le gluconate ferreux et l'ascorbate ferreux,
c. 1,0 × 10⁻¹ - 50,0 % en poids d'au moins un agent tensioactif non ionique,
dans lequel la quantité dudit au moins un inducteur (P) et dudit au moins un composé (A) est rapporté au volume total de la composition concentrée (Cc) et la quantité dudit au moins un agent tensioactif non ionique est rapporté au poids total de la composition concentrée (Cc).

10. Procédé selon l'une quelconque des revendications 6 à 9, dans lequel la composition concentrée (Cc) comprend de l'eau et comprend :
a. 1,0 ×10² - 1,0 ×10⁴ mM d'au moins un inducteur (P) ou d'un de ses sels correspondant à la formule suivante (I_{P1a}) : 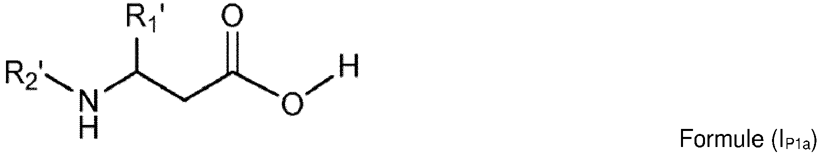 dans lequel
- chacun des R₁' est indépendamment choisi parmi le méthyle, l'éthyle, le propyle, l'isopropyle, le butyle, le tert-butyle ou l'isobutyle ; et
- chacun des R₂' est indépendamment choisi parmi l'hydrogène, l'alkyle en C₁₋₄, l'alcényle en C₂₋₄ , COR₅' ou C(O)OR₅', et dans lequel chacun des R₅' est indépendamment choisi parmi l'alkyle en C₁₋₄ ou l'alcényle en C₂₋₄, et dans lequel ledit alkyle en C₁₋₄ ou ledit alcényle en C₂₋₄ sont éventuellement substitués par un ou plusieurs substituants indépendamment choisis parmi les halos,
b. 10,0 - 250,0 mM d'au moins un composé (A), choisi parmi le FeSO₄, le citrate ferrique, le gluconate ferreux et l'ascorbate ferreux,
c. 1,0 × 10⁻³ à 2,5 % en poids d'au moins un agent tensioactif non ionique,
dans lequel la quantité dudit au moins un inducteur (P) et dudit au moins un composé (A) est rapporté au volume total de la composition concentrée (Cc) et la quantité dudit au moins un agent tensioactif non ionique est rapporté au poids total de la composition concentrée (Cc).

11. Formulation pour la culture de plantes [Formulation (F), ci-après] comprenant :
a. la composition concentrée (Cc) selon l'une quelconque des revendications 6 à 10, et l'un, l'autre ou les deux d'
b. un ou plusieurs éléments nutritifs pour les plantes dans une quantité collective d'au moins 50 % en poids sec (% en poids sec), sur la base du poids sec de la formulation ; et
c. un ou plusieurs produits phytopharmaceutiques comprenant d'autres inducteurs de défense de plantes, des herbicides, des pesticides, des insecticides, des miticides des acaricides, des nématicides, des fongicides, des bactéricides, des rodenticides et des agents régulateurs de croissance.
